Europäisches Patentamt

European Patent Office

Office européen des brevets

(19)

(11) **EP 0 869 459 B1**

(12) **EUROPÄISCHE PATENTSCHRIFT**

(45) Veröffentlichungstag und Bekanntmachung des Hinweises auf die Patenterteilung:
**29.10.2003 Patentblatt 2003/44**

(51) Int Cl.⁷: **G06T 15/50**

(21) Anmeldenummer: **98250121.5**

(22) Anmeldetag: **03.04.1998**

(54) **Bilddarstellungsverfahren und Vorrichtung zur Durchführung des Verfahrens**

Picture display method and device for carrying out this method

Méthode d'affichage d'image et dispositif pour mettre en oeuvre cette méthode

(84) Benannte Vertragsstaaten:
**AT CH DE GB LI**

(30) Priorität: **03.04.1997 DE 19714915**

(43) Veröffentlichungstag der Anmeldung:
**07.10.1998 Patentblatt 1998/41**

(73) Patentinhaber: **GMD - FORSCHUNGSZENTRUM INFORMATIONSTECHNIK GMBH D-53757 Sankt Augustin (DE)**

(72) Erfinder: **Bonello, Burckhardt 16562 Bergfelde bei Berlin (DE)**

(74) Vertreter: **Christiansen, Henning, Dipl.-Ing. Patentanwalt Pacelliallee 43/45 14195 Berlin (DE)**

(56) Entgegenhaltungen:
**EP-A- 0 366 463          GB-A- 2 246 497**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Bilddarstellungsverfahren zur Darstellung von computermodellierten Objekten gemäß dem Oberbegriff des Anspruchs 1 bzw. eine Vorrichtung zur Durchführung des Verfahrens gemäß dem Oberbegriff des Anspruchs 13.

In Computer-Grafiksystemen werden Objekte in der Regel durch Gittermodelle nachgebildet, wobei die Objekte durch die Raumkoordinaten der Knotenpunkte des Gittermodells sowie durch die optischen Eigenschaften, wie beispielsweise Farbe und Reflexionsverhalten, der zwischen den Knotenpunkten liegenden Polygonflächen definiert werden. Derartige Computer-Grafiksysteme sind beispielsweise aus VOORHIES, D.; FORAN, J.: Reflection Vector Shading Hardware, SIGGRAPH '94 und JACKÈL, D.; Rüsseler, H.: A Real Time Rendering System with Normal Vector Shading; 9$^{th}$ Eurographics Workshop on Graphics Hardware, Oslo (Norway), 1994 bekannt. Zur Berechnung des Bildeindrucks werden die einzelnen Polygonflächen in Rasterelemente (engl. Pixel) aufgeteilt, wobei für jedes Rasterelement die Raumkoordinaten sowie die räumliche Lage der lokalen Flächennormale berechnet wird, die für das Reflexionsverhalten und damit den Bildeindruck maßgebend ist. Durch eine Neigung der lokalen Flächennormale innerhalb der Polygonfläche ist es zum einen möglich, auch gekrümmte Polygonflächen zu simulieren, so daß an den Kanten zwischen benachbarten Polygonflächen ein knickfreier und damit optisch unauffälliger Übergang erreicht werden kann. Zum anderen ist es auf diese Weise auch möglich, rauhe Oberflächenstrukturen nachzubilden, indem die lokale Flächennormale innerhalb der jeweiligen Polygonfläche entsprechend der gewünschten Oberflächenstruktur geneigt wird, was auch als Bump-Mapping bezeichnet wird. Nach der Berechnung der Raumkoordinaten der einzelnen Rasterelemente und der jeweiligen lokalen Flächennormale wird dann für jedes Rasterelement individuell entsprechend einem lokalen Beleuchtungsmodell der Bildeindruck berechnet, wobei die Perspektive des Betrachters, die räumliche Lage sowie die optischen Eigenschaften des Rasterelements, die Ausrichtung der lokalen Flächennormale sowie die räumliche Lage und die optischen Eigenschaften der Lichtquellen berücksichtigt werden, welche die Objekte beleuchten.

Zur Berechnung des Bildeindrucks der einzelnen Rasterelemente wird in der Regel das in PHONG: Illumination for computer generated pictures; Communications of the ACM, 18(6):311-317, Juni 1975 beschriebene Beleuchtungsmodell verwendet, das auch in dem Quasi-Industriestandard OpenGL seinen Niederschlag gefunden hat. Dieses Beleuchtungsmodell ermöglicht vorteilhaft die Berücksichtigung vielfältiger optischer Effekte, wie beispielsweise ambienter, diffuser und spekularer Reflexion, und liefert somit einen sehr realistischen Bildeindruck.

Ein Nachteil der vorbekannten, auf einem lokalen Beleuchtungsmodell beruhenden Bilddarstellungsverfahren ist jedoch der relativ große Rechenaufwand. Bei einer Software-Realisierung verursacht dies wegen der seriellen Bearbeitung der Rechenschritte eine Verlängerung der für die Berechnung eines Bildes erforderlichen Zeitspanne, was eine Echt-Zeit-Wiedergabe von Bewegungsdarstellungen, insbesondere bei komplexen Beleuchtungsverhältnissen, erschwert. Bei einer Hardware-Realisierung läßt sich der erhöhte Rechenaufwand zwar durch eine Parallelarchitektur mit mehreren parallel arbeitenden Pipelines bewältigen, jedoch ist dies mit einer größeren Chipfläche verbunden.

Das Dokument EP-A-0 366 463 offenbart ein Verfahren zur Darstellung von Polygonen bei dem - abhängig von deren Krümmung - das gerade darzustellende Dreieck rekursiv in Teildreiecke unterteilt wird und diese gemäß dem Gouraud-Beleuchtungsmodell dargestellt werden um so die flächige Anwendung des aufwendigen Phong-Beleuchtungsmodell zu vermeiden.

Der Erfindung liegt somit die Aufgabe zugrunde, ein Bilddarstellungsverfahren der vorstehend beschriebenen Art bzw. eine Vorrichtung zur Durchführung des Verfahrens zu schaffen, bei dem der Bildeindruck entsprechend einem lokalen Beleuchtungsmodell berechnet wird, wobei der Rechenaufwand verringert ist, um eine Realisierung des Bilddarstellungsverfahrens auch mit relativ einfacher Hardware zu ermöglichen oder auch komplexe Szenen mit einer Vielzahl von Lichtquellen hinreichend schnell berechnen zu können.

Die Aufgabe wird, ausgehend von einem Bilddarstellungsverfahren gemäß dem Oberbegriff des Anspruchs 1, durch die kennzeichnenden Merkmale des Anspruchs 1 bzw. - hinsichtlich der Vorrichtung zur Durchführung des Verfahrens - durch die Merkmale des Anspruchs 13 gelöst.

Die Erfindung schließt die technische Lehre ein, den Bildeindruck innerhalb einer Polygonfläche zur Einsparung von Rechenzeit und/oder zur Verringerung der Hardwarevoraussetzungen jeweils nur für einen Teil der Rasterelemente entsprechend einem lokalen Beleuchtungsmodell zu berechnen und den Bildeindruck für die restlichen Rasterelemente aus den zuvor berechneten Bildinformationswerten zu interpolieren.

Der Begriff lokales Beleuchtungsmodell ist hierbei und im folgenden nicht auf das vorstehend erwähnte und vorzugsweise verwendete Phong'sche Beleuchtungsmodell beschränkt, sondern umfaßt prinzipiell auch andere Beleuchtungsmodelle, welche die Berechnung des Bildeindrucks eines Rasterelements einer Polygonfläche in Abhängigkeit von den Beleuchtungsverhältnissen und den geometrischen Verhältnissen ermöglichen.

Die erfinderischen Maßnahmen lassen sich sowohl mit rein softwaremäßigen Maßnahmen als auch mittels geeigneter spezieller Hardware ausführen. Im Rahmen der hardwaremäßigen Realisierung ist es auch möglich, mehrere sogenannte Pipelines parallel zu schalten, in denen jeweils der Bildeindruck eines Rasterelements berechnet wird. Derartige Pipelines sind Rechenwerke, bestehend aus hintereinandergeschalteten, durch Speicherelemente getrennten Baugruppen, in denen sich gleichzeitig (parallel) mehrere Zwischenergebnisse in unterschiedlichen Phasen der Berechnung befinden. Mit jedem Takt rücken alle Zwischenergebnisse einen Berechnungsschritt weiter, so daß pro Takt jeweils ein Endergebnis erzielt werden kann. Durch ein derartiges "Pipelining" läßt sich die zur Berechnung eines Bildes erforderliche Zeitspanne wesentlich verkürzen.

Wenn daher nachfolgend von "Baugruppen" die Rede ist, kann es sich dabei auch um Funktionsgruppen, beispielsweise in Form von elektrischen Schaltungen, handeln. Hierbei ist auch eingeschlossen, daß ein und dieselbe Bau- oder Funktionsgruppe nacheinander unterschiedliche Operationen ausführt, wie es bei der Prozessortechnik allgemein der Fall ist. Geschwindigkeitsvorteile lassen sich aber - wie erläutert - vor allen Dingen dann erzielen, wenn Funktionsgruppen parallel nebeneinander tätig sind.

Im Rahmen der erfindungsgemäßen Maßnahmen zur Darstellung von Objekten im Rahmen der Bildverarbeitung werden die einzelnen Polygonflächen vorzugsweise in mehrere parallele äquidistante Rasterzeilen (engl. Scanlines) aufgeteilt, in denen dann wiederum äquidistant die Rasterelemente angeordnet werden. Die Aufteilung der Polygonfläche erfolgt durch die erste Bau- oder Funktionsgruppe einer Recheneinheit, die an ihrem Eingang einen die räumliche Lage der Polygonfläche repräsentierenden ersten Parametersatz aufnimmt und an ihrem Ausgang eine Vielzahl von ersten Koordinatensätzen ausgibt, die die räumliche Lage jeweils eines Rasterelements repräsentieren. Die Berechnung des ersten Parametersatzes für jede Polygonfläche kann durch ein übergeordnetes Grafiksystem erfolgen, das mehrere der hier beschriebenen Recheneinheiten beinhalten kann, so daß es möglich ist, den Bildeindruck mehrerer Objekte einer räumlichen Szene parallel zu berechnen, wodurch die Rechenzeit bei komplexen Szenen drastisch verringert wird.

Weiterhin weist die Recheneinheit eine zweite Baugruppe auf, die für jedes Rasterelement der Polygonfläche einen zweiten Koordinatensatz berechnet, der die räumliche Lage der lokalen Flächennormale repräsentiert. Hierbei ist zu bemerken, daß die lokale Flächennormale nicht mit der Flächennormalen der gesamten Polygonfläche übereinstimmen muß, da die Polygonfläche vorzugsweise gekrümmt ist, um an den Kanten aneinandergrenzender Polygonflächen einen knickfreien, optisch unauffälligen Übergang zu erreichen. In einer möglichen Ausführungsform dieser Variante sind die Flächennormalen an den Eckpunkten der einzelnen Polygonflächen durch den ersten Parametersatz vorgegeben, der die räumliche Lage der Polygonfläche repräsentiert. Die Berechnung der lokalen Flächennormale für die einzelnen Rasterelemente der Polygonfläche erfolgt dann durch Interpolation der Eckpunktnormalen, was auch den Vorteil bietet, daß die lokalen Flächennormalen benachbarter Polygonflächen an den gemeinsamen Eckpunkten gleich sind und sich entlang der gemeinsamen Kante aufgrund der Interpolation allenfalls geringfügig unterscheiden, was zu einem im wesentlichen knickfreien und damit optisch unauffälligen Übergang zwischen benachbarten Polygonflächen führt.

Die eigentliche Berechnung der Bildinformationswerte entsprechend dem lokalen Beleuchtungsmodell erfolgt dann durch eine dritte Baugruppe, die eingangsseitig einen zweiten Parametersatz aufnimmt, der die räumliche Lage sowie die optischen Eigenschaften mindestens einer ersten Lichtquelle repräsentiert. So enthält der zweite Parametersatz vorzugsweise für jede Lichtquelle deren Raumkoordinaten, die Vektorkomponenten der Hauptabstrahlrichtung, die ambiente, diffuse und spekulare Farbe der Lichtquelle sowie gegebenenfalls einen sogenannten Spotlight-Cutoff-Winkel, der den Öffnungswinkel des Abstrahlkegels angibt, außerhalb dessen die Lichtquelle keine Intensität aufweist. Darüber hinaus kann der zweite Parametersatz auch die winkelabhängige Abschwächung der einzelnen Lichtquellen angeben, indem beispielsweise ein Exponent für das Phong'sche Beleuchtungsmodell vorgegeben wird.

Eingangsseitig ist die dritte Baugruppe mit der ersten Baugruppe verbunden, um den ersten Koordinatensatz aufzunehmen, der die räumliche Lage des Rasterelements repräsentiert. Zur Aufnahme des zweiten Koordinatensatzes, der die Ausrichtung der lokalen Flächennormale repräsentiert, ist die dritte Baugruppe eingangsseitig mit der zweiten Baugruppe verbunden.

Weiterhin weist die Recheneinheit eine vierte Baugruppe auf, die für jedes Rasterelement in Abhängigkeit von der virtuellen Perspektive des Betrachters die Position des Rasterelements auf einem Bildschirm berechnet. Die vierte Baugruppe ist hierzu eingangsseitig mit der ersten Baugruppe verbunden und berechnet aus den ersten Koordinatensätzen, die die räumliche Lage der einzelnen Rasterelemente repräsentieren, jeweils einen zweidimensionalen Bildschirmdatensatz, der die horizontale und vertikale Position repräsentiert, an der das jeweilige Rasterelement innerhalb des Bildschirmkoordinatensystems erscheinen muß, um die gewünschte Perspektive zu erzeugen.

Bei der Berechnung des Bildeindrucks für die einzelnen Rasterelemente wird entsprechend dem lokalen Beleuchtungsmodell jeweils ein Bildinformationswert berechnet, der bei einer Verwendung des bekannten RGB-Farbmodells beispielsweise die Intensität der drei Grundfarben wiedergibt. Der Begriff Bildinformationswert ist jedoch nicht auf die Wiedergabe der drei Grundfarben entsprechend dem RGB-Farbmodell beschränkt, sondern umfaßt bei einer Verwendung anderer Farbmodelle, wie beispielsweise des CMYK-Farbmodells oder des HSB-Farbmodells, auch die Wiedergabe der entsprechenden Parameter. Darüber hinaus ist es bei einer monochromen Darstellung auch möglich, als Bildinformationswert lediglich die Grautönung des jeweiligen Rasterelements zu berechnen. Entscheidend ist hierbei also lediglich, daß der Bildinformationswert den Bildeindruck des jeweiligen Rasterelements wiedergibt und eine entsprechende Ansteuerung eines Bildschirms zur Wiedergabe ermöglicht.

Gemäß der Erfindung wird zur Einsparung von Rechenzeit und/oder zur Verringerung der Hardwarevoraussetzungen ein erster Teil der Rasterelemente der jeweiligen Polygonfläche ausgewählt, für die dann der Bildinformationswert entsprechend dem lokalen Beleuchtungsmodell berechnet wird. Entscheidend für die Einsparung von Rechenzeit ist hierbei, daß die komplizierten Berechnungen des Bildinformationswerts entsprechend dem lokalen Beleuchtungsmodell nur für den ersten Teil der Rasterelemente erforderlich sind. Die Bildinformationswerte eines die restlichen Rasterelemente der jeweiligen Polygonfläche umfassenden zweiten Teils werden dann aus den zuvor berechneten Bildinformationswerten des ersten Teils der Rasterelemente interpoliert, was einen wesentlich geringeren Rechenaufwand erfordert als die komplizierte Berechnung entsprechend dem lokalen Beleuchtungsmodell und somit vorteilhaft zu einer Einsparung von Rechenzeit führt.

Bei der vorstehenden erwähnten Aufteilung der Polygonfläche in Rasterzeilen kann die Interpolation eindimensional über die Rasterelemente jeweils einer Rasterzeile erfolgen. Die Bildinformationswerte können dann in den einzelnen Rasterzeilen beispielsweise für jedes zweite, dritte oder vierte Rasterelement entsprechend dem lokalen Beleuchtungsmodell berechnet und für die dazwischenliegenden Rasterelemente interpoliert werden. Die Interpolation des Bildinformationswerts kann hierbei linear aus den Bildinformationswerten der beiden unmittelbar benachbarten Rasterelementen erfolgen, jedoch ist es bei Einbeziehung mehrerer benachbarter Rasterelemente als Stützstellen auch möglich, Polynome höherer Ordnung zur Interpolation zu verwenden, wozu sich besonders Splines eignen.

In einer vorteilhaften Variante der Erfindung ist vorgesehen, den Abstand der als Stützstellen für die Interpolation dienenden Rasterelemente innerhalb der Polygonfläche zu variieren, um den Berechnungsaufwand an die Komplexität des jeweiligen Bildinhalts anzupassen. So führt eine Interpolation auch mit wenigen Stützstellen zu guten Ergebnissen, wenn sich der Bildinformationswert nur geringfügig ändert, wohingegen eine starke örtliche Schwankung des Bildinformationswerts innerhalb der Polygonfläche eine entsprechend große Dichte von Stützstellen erfordert, um einen natürlichen Bildeindruck zu erzeugen. In dieser Variante der Erfindung wird deshalb laufend die örtliche Schwankung des Bildinformationswerts erfaßt und die Stützstellendichte entsprechend angepaßt. Die Anpassung der Stützstellendichte erfolgt dann gegebenenfalls durch exaktes Nachberechnen der Bildinformationswerte von eigentlich für die Interpolation vorgesehenen Rasterelementen entsprechend dem lokalen Beleuchtungsmodell. Geht man beispielsweise von einem Stützstellenabstand von 3 Rasterelementen in jeder Dimension aus, so genügt dies im Normalfall, um einen natürlichen Bildeindruck zu erzeugen. Wenn allerdings zwischen den Bildinformationswerten zweier Stützstellen ein großer Unterschied besteht, dann werden - je nach Qualitäts- und Zeitanforderung - die Zwischenwerte anschließend durch korrekt berechnete Bildinformationswerte ersetzt. Das Kriterium für das Nachberechnen könnte auch von dem Winkel zur Hauptabstrahlrichtung und dem Material- und/oder Spotexponenten abhängen.

Zur Minimierung des Hardwareaufwands kann es vorteilhaft sein, zur Berechnung der Bildinformationswerte entsprechend dem lokalen Beleuchtungsmodell nur eine Baugruppe vorzusehen, die jeweils nur den Bildinformationswert eines einzigen Rasterelements berechnen kann. Da bei der Interpolation jedoch die Bildinformationswerte mehrere Rasterelemente benötigt werden, ist in dieser Variante der Erfindung vorgesehen, der dritten Baugruppe der Recheneinheit einen Zwischenspeicher nachzuschalten, der die Bildinformationswerte aufnimmt, um nachfolgend eine Interpolation zu ermöglichen.

Bei der vorstehend beschriebenen eindimensionalen Interpolation über die Rasterelemente jeweils einer Rasterzeile eignet sich hierzu vorteilhaft ein sogenannter Cache mit mehreren Speicherplätzen zur Aufnahme der Bildinformationswerte jeweils eines Rasterelements und mehreren Ausgängen zur gleichzeitigen Ausgabe mehrerer unmittelbar nacheinander berechneter Bildinformationswerte. Die Interpolation der Bildinformationswerte erfolgt dann durch eine fünfte Baugruppe, die eingangsseitig mit dem Cache verbunden ist und beispielsweise den Bildinformationswert des ($i$)-ten und des ($i$+2)-ten Rasterelements jeweils einer Rasterzeile aufnimmt und daraus den Bildinformationswert des ($i$+1)-ten Rasterelements linear interpoliert. In einer einfachen Ausführungsform ist es zur Zwischenspeicherung der Bildinformationswerte auch möglich, mehrere FIFO-Speicher hintereinander zu schalten.

In einer anderen Variante der Erfindung erfolgt die Interpolation der Bildinformationswerte dagegen nicht eindimensional über die Rasterelemente jeweils einer Rasterzeile, sondern zweidimensional, indem auch die Rasterelemente benachbarter Rasterzeilen bei der Interpolation berücksichtigt werden. Dies kann zu einer Verbesserung der Interpolationsergebnisse und der Bildqualität führen oder zu einer Verringerung des Berechnungsaufwands verwendet werden, indem benachbarte Zeilen komplett durch Interpolation berechnet werden.

In einer vorteilhaften Ausführungsform dieser Variante werden zur Ermöglichung einer zweidimensionalen Interpolation mehrere Rasterzeilen gleichzeitig bearbeitet, wozu sich besonders eine Parallelarchitektur mit mehreren sogenannten Pipelines eignet, wobei jede Pipeline eine Baugruppe enthält, die die Bildinformationswerte jeweils eines Rasterelements entsprechend dem lokalen Beleuchtungsmodell berechnet.

In einer anderen Ausführungsform dieser Variante ist dagegen vorgesehen, die entsprechend dem lokalen Beleuchtungsmodell berechneten Bildinformationswerte bestimmter Rasterzeilen zunächst in einem Zwischenspeicher abzulegen, um anschließend über die Rasterelemente mehrerer Rasterzeilen interpolieren zu können.

Durch die vorstehend beschriebene Interpolation der Bildinformationswerte mehrerer Rasterelemente wird die Zahl der Rasterelemente herabgesetzt, für die der Bildinformationswert in aufwendiger Weise entsprechend dem lokalen Beleuchtungsmodell erfolgen muß, was zu einer Verringerung des Berechnungsaufwands führt. Der Rechenaufwand bei der Berechnung des Bildeindrucks eines Objekts hängt jedoch nicht nur von der Zahl der Rasterelemente ab, für die jeweils Bildinformationswerte berechnet bzw. interpoliert werden müssen, sondern wird auch durch die Zahl der Lichtquellen beeinflußt, welche die Objekte beleuchten. In einer vorteilhaften Variante der Erfindung ist deshalb vorgesehen, bei der entsprechend dem lokalen Beleuchtungsmodell erfolgenden Berechnung der Bildinformationswerte in den einzelnen Rasterelementen abwechselnd jeweils nur einen Teil der Lichtquellen zu berücksichtigen, um Rechenaufwand zu sparen. Der Einfluß der in einem Rasterelement nicht berücksichtigten Lichtquellen wird dann durch Interpolation der Bildinformationswerte benachbarter Rasterelemente ermittelt, die bei der Berechnung entsprechend dem lokalen Beleuchtungsmodell andere Lichtquellen berücksichtigen. So ist es bei einer eindimensionalen Interpolation entlang jeweils einer Rasterzeile und insgesamt vier Lichtquellen beispielsweise möglich, daß die erste und die zweite Lichtquelle bei der Berechnung des lokalen Beleuchtungsmodells in den geradzahligen Rasterelementen berücksichtigt werden, während der Einfluß der ersten und zweiten Lichtquelle in den ungeradzahligen Rasterelementen durch Interpolation ermittelt wird. Die dritte und vierte Lichtquelle werden dann bei der Berechnung des lokalen Beleuchtungsmodells in den ungeradzahligen Rasterelementen berücksichtigt, während der Einfluß der dritten und vierten Lichtquelle in den geradzahligen Rasterelementen interpoliert wird. Die Berücksichtigung unterschiedlicher Lichtquellen bei der Berechnung des lokalen Beleuchtungsmodells in den einzelnen Rasterelementen ist jedoch nicht auf die vorstehend erwähnte eindimensionale Interpolation beschränkt, sondern auch bei einer zweidimensionalen Interpolation anwendbar. Auch ist es möglich, die vorhandenen Lichtquellen in mehr als zwei Gruppen einzuteilen. So können bei einer zweidimensionalen Interpolation beispielsweise in der einen Rasterzeile abwechselnd eine erste und eine zweite Gruppe von Lichtquellen und in der nächsten Rasterzeile abwechselnd eine dritte und eine vierte Gruppe von Lichtquellen berücksichtigt werden.

Bei den vorstehend beschriebenen Varianten der Erfindung werden sämtliche Lichtquellen zur Berechnung der Bildinformationswerte der Rasterelemente berücksichtigt, wobei die Berechnung der Bildinformationswerte entsprechend dem lokalen Beleuchtungsmodell oder durch Interpolation der Bildinformationswerte benachbarter Rasterelemente erfolgt. Die Intensität der Lichtquellen kann jedoch in den verschiedenen Rasterelementen sehr unterschiedlich sein. Zum einen nimmt die am Ort eines Rasterelements wahrnehmbare Intensitat einer Lichtquelle mit dem Abstand zwischen der Lichtquelle und dem Rasterelement ab, was als Entfernungsabschwächung bezeichnet wird. Zum anderen wird die Intensität einer Lichtquelle am Ort eines Rasterelements von der Lage des Rasterelements relativ zur Hauptabstrahlrichtung der Lichtquelle beeinflußt, was als Spot-Light-Abschwächung bezeichnet wird. Darüber hinaus hängt die wahrnehmbare Intensität einer Lichtquelle auch von dem Winkel zwischen dem reflektierten Lichtvektor und dem Augvektor (Vektor zwischen Betrachter und Rasterelement) ab. Außerdem gibt es verschiedene Beleuchtungsmodelle, die auch andere Abhängigkeiten aufweisen. Der Rechenaufwand zur Berücksichtigung einer Lichtquelle entsprechend dem lokalen Beleuchtungsmodell lohnt sich deshalb bei einer Lichtquelle nur dann, wenn diese Lichtquelle am Ort des Rasterelements trotz Entfernungs- und/oder Spot-Light-Abschwächung noch hinreichend hell ist. Bei einem digitalen Grafiksystem mit einer Auflösung der Farb- bzw. Helligkeitswerte von 8 Bit wird eine Lichtquelle von dem System als unsichtbar betrachtet, wenn die Intensität der Lichtquelle 1/256 des Maximalwerts unterschreitet. Unterhalb dieses Grenzwerts ist eine aufwendige Berücksichtigung der Lichtquelle in dem lokalen Beleuchtungsmodell somit nutzlos. In der Praxis hat sich darüber hinaus gezeigt, daß auch solche Lichtquellen irrelevant sind, die mit ihrer Helligkeit am Ort eines Rasterelements nur geringfügig oberhalb dieser numerisch bedingten Auflösungsgrenze liegen oder von anderen, wesentlich stärkeren Lichtquellen überblendet werden.

In einer weiterbildenden Variante der Erfindung ist deshalb vorgesehen, jeweils die Intensität der einzelnen Lichtquellen zu berechnen und nur solche Lichtquellen bei der aufwendigen Berechnung des lokalen Beleuchtungsmodells zu berücksichtigen, deren Intensität einen vorgegebenen Grenzwert überschreitet. Die Intensitätsberechnung der einzelnen Lichtquellen kann hierbei individuell für jedes Rasterelement erfolgen, jedoch ist es auch möglich, die Intensitätsberechnung nur für jede Rasterzeile oder gar nur für jede Polygonfläche durchzuführen, was zulässig ist, wenn die Ausdehnung der Polygonfläche bzw. die Ausdehnung der Rasterzeile wesentlich geringer ist als der Abstand zur nächstgelegenen Lichtquelle.

Die Intensitätsberechnung kann hierbei allein aufgrund der Entfernungsabschwächung erfolgen oder auch die Spot-Light-Abschwächung mit berücksichtigen. Die Entfernungsabschwächung läßt sich unter der Annahme einer mit der Entfernung quadratisch abnehmenden Intensität in einfacher Weise aus den Raumkoordinaten der jeweiligen Lichtquelle und den Raumkoordinaten des jeweiligen Rasterelements bzw. des Bezugspunktes auf der Rasterzeile oder der Polygonfläche berechnen. Die Spot-Light-Abschwächung ergibt sich dagegen aus dem Winkel zwischen der Hauptabstrahlrichtung der jeweiligen Lichtquelle und der Verbindungslinie zwischen der Lichtquelle und dem Rasterelement bzw. dem Bezugspunkt auf der Rasterzeile oder der Polygonfläche.

Bei der vorstehend beschriebenen Variante der Erfindung erfolgt die Intensitätsberechnung vorzugsweise individuell für jedes Rasterelement, wobei die Abschwächungen sämtlicher Lichtquellen berechnet werden müssen. Zur Verringerung des Berechnungsaufwands bei der Ermittlung der relevanten Lichtquellen ist deshalb in einer weiterbildenden Variante der Erfindung vorgesehen, die Abschwächung der einzelnen Lichtquellen nicht individuell für jedes Rasterelement, sondern beispielsweise nur ein- oder zweimal in jeder Rasterzeile zu berechnen. Ausgehend von dieser Berechnung wird dann eine Liste der relevanten Lichtquellen und eine Liste der irrelavanten Lichtquellen erstellt, die entlang der Rasterzeile mitgeführt und laufend aktualisiert wird. Bei dieser laufenden Aktualisierung werden jedoch nicht die Abschwächungen sämtlicher Lichtquellen neu berechnet, sondern zunächst nur die Abschwächungen der als relevant eingestuften Lichtquellen. Unterschreitet eine der als relevant eingestuften Lichtquellen den vorgegebenen Grenzwert für die minimale Helligkeit, so wird diese Lichtquelle aus der Liste der relevanten Lichtquelle gestrichen und anschließend innerhalb derselben Rasterzeile nicht mehr berücksichtigt. Darüber hinaus wird auch noch die Abschwächung der in der Liste der irrelevanten Lichtquellen an erster Stelle geführten Lichtquelle exakt berechnet. Überschreitet die Helligkeit dieser Lichtquelle den vorgegebenen Grenzwert, so wird diese Lichtquelle in die Liste der relevanten Lichtquellen eingefügt und anschließend in derselben Rasterzeile bei der Berechnung des lokalen Beleuchtungsmodells entsprechend berücksichtigt. Falls die Helligkeit der in der Liste der irrelevanten Lichtquellen an erster Stelle erscheinenden Lichtquelle den vorgegeben Grenzwert dagegen unterschreitet, so wird diese Lichtquelle an die letzte Stelle der Liste der irrelevanten Lichtquellen gesetzt. Auf diese Weise gelangen Lichtquellen, deren Abschwächung innerhalb einer Rasterzeile geringer wird, in die Liste der relevanten Lichtquellen und werden entsprechend berücksichtigt. Die Einsparung an Rechenaufwand beruht hierbei darauf, daß die Berechnung der Abschwächung in jedem Rasterelement lediglich für die als relevant eingestuften Lichtquellen sowie für die erste der als irrelevant eingestuften Lichtquellen erfolgt.

Das vorstehend erläuterte Verfahren zur Behandlung der Liste der irrelevanten Lichtquellen stellt nur eine von mehreren Möglichkeiten dar. Ziel ist es letztendlich, die Lichtquellen aus der Liste der irrelevanten Lichtquellen "abzuscannen", um möglichst den Zeitpunkt nicht zu spät festzustellen, an dem eine Lichtquelle wieder relevant wird.

Bei den vorstehend beschriebenen Varianten der Erfindung wird der Bildinformationswert für bestimmte Rasterelemente entsprechend dem verwendeten lokalen Beleuchtungsmodell korrekt berechnet, während die Bildinformationswerte der restlichen Rasterelemente interpoliert werden. Die Erfindung ist jedoch nicht darauf beschränkt, die Rasterelemente in Gruppen jeweils für die Berechnung bzw. die Interpolation aufzuteilen, vielmehr ist es auch möglich, die Berechnung entsprechend dem lokalen Beleuchtungsmodell in mehrere Berechnungsschritte aufzuteilen. So besteht die Berechnung des Bildinformationswerts in der Regel aus einer Summation der Lichtanteile einer oder auch mehrerer Lichtquellen. In einer weiterbildenden Variante der Erfindung werden die einzelnen Summanden der Berechnungsformel in zwei Gruppen eingeteilt, von denen eine berechnet und die andere interpoliert wird. Der somit ermittelte Bildinformationswert besteht dann teilweise aus interpolierten und teilweise berechneten Anteilen.

Die zuvor beschriebenen Varianten der Erfindung ermöglichen eine Verringerung des Berechnungsaufwandes bei der Darstellung von computermodellierten Objekten, indem die Bildinformationswerte lediglich für einen Teil der Rasterelemente entsprechend dem lokalen Beleuchtungsmodell berechnet werden, während die Bildinformationswerte der restlichen Rasterelemente anschließend durch Interpolation der zuvor berechneten Bildinformationswerte ermittelt bzw. mangels Relevanz erst gar nicht berechnet werden müssen. Neben dieser räumlichen Korrelation der Bildinformationswerte benachbarter Rasterelemente besteht bei einer Bewegtbilddarstellung auch die Möglichkeit einer zeitlichen Korrelation der Bildinformationswerte. Die Erfindung geht in dieser Variante der Erfindung von der Erkenntnis aus, daß sich die Beleuchtungssituation zwischen zeitlich benachbarten Bildern (engl. Frames) häufig kaum ändert, so daß es ausreicht, die Relevanz der einzelnen Lichtquellen beispielsweise nur für jedes dritte Bild exakt zu berechnen und bei der Darstellung der zeitlich dazwischen liegenden Bilder beizubehalten.

Der Körper bzw. die Fläche, die auf dem Bildschirm dargestellt werden soll, wird - wie bereits vorstehend beschrieben - im Computer als Gittermodell nachgebildet. Die Oberfläche besteht deshalb aus zahlreichen Polygonflächen, deren räumliche Lage durch die Raumkoordinaten der Knotenpunkte des Gittermodells definiert ist. In einer vorteilhaften Ausführungsform der Erfindung werden als Polygonflächen Dreiecke verwendet. Dies bedeutet, daß im Gittermodell jeweils drei Punkte durch Kanten miteinander verbunden sind. Die Verwendung von Dreiecken zur Modellierung der Oberflächen hat den Vorteil, daß die Flächennormale eines Dreiecks durch die Raumkoordinaten der Eckpunkte eindeutig definiert ist, da drei Punkte immer in einer Ebene liegen, während bei Polygonen mit mehr als drei Eckpunkten die Möglichkeit besteht, daß die Eckpunkte nicht exakt in einer Ebene liegen, so daß auch die Flächennormale nicht exakt definiert ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1        als bevorzugtes Ausführungsbeispiel der Erfindung eine Recheneinheit zur Darstellung von computermodellierten Objekten als Bestandteil eines umfassenden Computer-Grafiksystems,

Figur 2a, 2b        exemplarisch eine Polygonfläche eines computermodellierten Objekts zur Veranschaulichung der Aufteilung der Polygonfläche in Rasterelemente,

Figur 3 — eine schematische Darstellung der Beleuchtungssituation eines Rasterelements zur Veranschaulichung des lokalen Beleuchtungsmodells,

Figur 4 — ein weiteres Ausführungsbeispiel einer erfindungsgemäßen Recheneinheit zur Darstellung von computer-modellierten Objekten sowie

Figur 5 — eine Polygonfläche, bei der in den einzelnen Rasterelementen verschiedene Gruppen von Lichtquellen berücksichtigt werden, um Rechenzeit einzusparen.

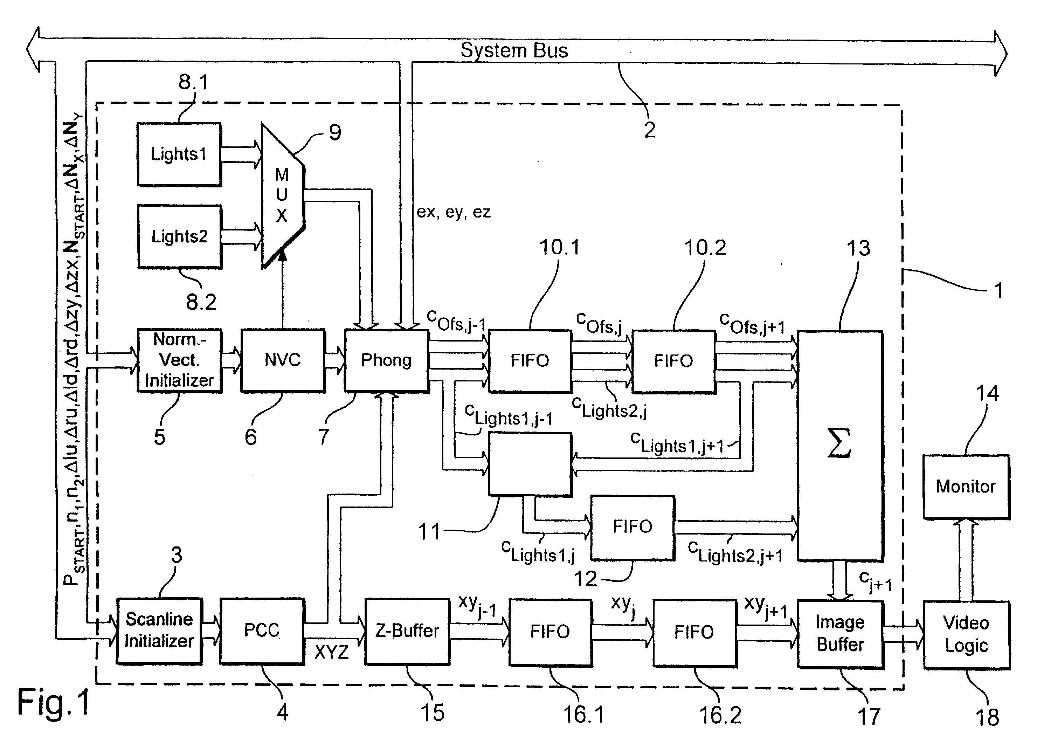

Figur 1 zeigt eine Recheneinheit 1, die eine Darstellung von computer-modellierten Objekten ermöglicht und Bestandteil eines umfassenden Computer-Grafiksystems ist, von dem hier lediglich ein Systembus 2 dargestellt ist. Die einzelnen Objekte sind hierbei in dem Grafiksystem als Gittermodell gespeichert und durch die Raumkoordinaten der Knotenpunkte des Gittermodells sowie durch die optischen Eigenschaften der zwischen den Knotenpunkten liegenden dreieckigen Polygonflächen - beispielsweise die Farbe und die Reflexionseigenschaften - definiert.

Die dargestellte Recheneinheit 1 berechnet nacheinander den Bildeindruck sämtlicher Polygonflächen der einzelnen Objekte, wobei die räumliche Lage und die Oberflächeneigenschaften der jeweiligen Polygonfläche, die gewünschte Perspektive sowie die Beleuchtungssituation von dem Grafiksystem über den Systembus 2 vorgegeben werden. Die Recheneinheit 1 erhält hierzu von dem Grafiksystem über den Systembus 2 für jede darzustellende Polygonfläche einen Parametersatz, der die räumliche Lage sowie die optischen Eigenschaften der jeweiligen Polygonfläche wiedergibt und eine Feinaufteilung der Polygonfläche in eine Vielzahl von Rasterelementen ermöglicht, die jeweils in Rasterzeilen angeordnet sind. So enthält der Parametersatz die Raumkoordinaten $(x_s, y_s, z_s)$ eines Eckpunkts $P_{Start}$ des Dreiecks, die Kanteninkremente $\Delta lu, \Delta ru, \Delta ld, \Delta rd$, die Anzahl der Rasterzeilen $n_1, n_2$ des Dreiecks, sowie die Neigung $\Delta zx$ der Dreiecksfläche zur X-Achse und die Neigung $\Delta zy$ der Dreiecksfläche zur Y-Achse. Darüber hinaus enthält der Parametersatz die Koordinaten der lokalen Flächennormale $\mathbf{N}_{Start}$ in dem vorgegeben Eckpunkt sowie die Vektorinkremente $\Delta\mathbf{N}_x, \Delta\mathbf{N}_y$, die eine Berechnung der lokalen Flächennormale in jedem Rasterelement der Dreiecksfläche ermöglichen. Die Dreiecksfläche ist also nicht notwendigerweise eben, sondern in der Regel gekrümmt. Zum einen ermöglicht dies eine Anpassung der Krümmung an einen vorgegebenen Oberfächenverlauf der Objekte. Zum anderen ist es auf diese Weise möglich, an den Kanten zwischen benachbarten Dreiecksflächen einen knickfreien und damit optisch unauffälligen Übergang zu erreichen. Weiterhin enthält der Parametersatz Informationen über die Farbe der Dreiecksoberfläche, das Absorptionsverhalten, die Durchsichtigkeit der Dreiecksfläche und ähnliches.

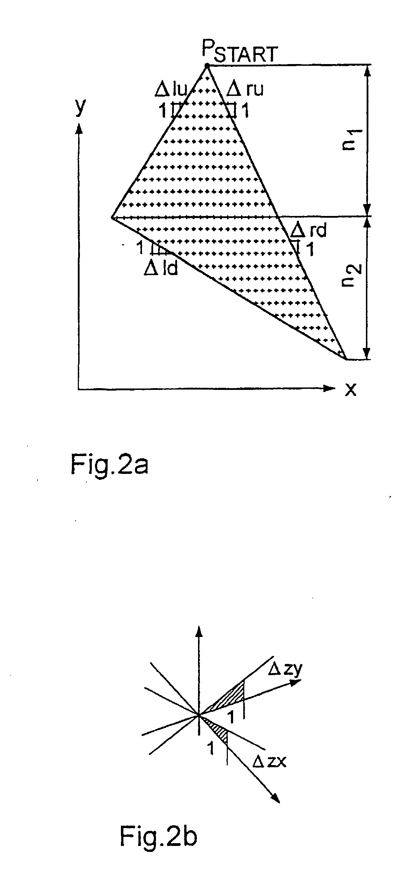

Der von dem übergeordneten Grafiksystem gelieferte Parametersatz wird in der Recheneinheit 1 unter anderem einer Baugruppe 3 (engl. Scanline Initializer) zugeführt, die die Dreiecksfläche zunächst in eine Vielzahl von Rasterzeilen aufteilt und für jede Rasterzeile die Raumkoordinaten des Anfangspunkts $(x_l, y_l, z_l)$ und des Endpunkts $(x_r, y_r, z_r)$ berechnet. Die Figuren 2a und 2b zeigen eine derartige Dreiecksfläche zur Veranschaulichung der Aufteilung in Rasterelemente. Die einzelnen Rasterzeilen liegen jeweils parallel zur X-Achse und äquidistant zueinander, so daß sich die Y-Koordinate sämtlicher Rasterelemente einer Rasterzeile aus der Y-Koordinate $y_s$ des vorgegebenen Eckpunkts $P_{Start}$ und der Nummer $i$ der Rasterzeile ergibt. Für die Y-Koordinaten von Anfangspunkt und Endpunkt der einzelnen Rasterzeilen gilt also:

$$y_l = y_s + i \qquad y_r = y_s + i$$

Die X-Koordinate $x_l$ des Anfangspunkts jeder Rasterzeile ergibt sich entsprechend aus der X-Koordinate $x_s$ des vorgegebenen Startpunkts $P_{start}$, der Nummer $i$ der Rasterzeile sowie dem Kanteninkrement $\Delta lu$ bzw. $\Delta ld$. Innerhalb der ersten $n_1$ Rasterzeilen wird hierbei das Kanteninkrement $\Delta lu$ und anschließend das Kanteninkrement $\Delta ld$ verwendet.

$$x_l = x_S + \Delta lu \cdot i \qquad \text{für } i \leq n_1$$

$$x_l = x_s + \Delta lu \cdot n_1 + (i-n_1) \cdot \Delta ld \qquad \text{für } n_1 < i \leq n_1 + n_2$$

In gleicher Weise ergibt sich die X-Koordinate $x_r$ des Endpunkts jeder Rasterzeile aus der X-Koordinate $x_s$ des Startpunkts $P_{start}$, der Nummer $i$ der Rasterzeile sowie dem Kanteninkrement $\Delta ru$ bzw. $\Delta rd$. Hierbei wird während der ersten $n_1$ Rasterzeilen das Kanteninkrement $\Delta ru$ und anschließend das Kanteninkrement $\Delta rd$ verwendet:

$$x_r = x_S + \Delta ru \cdot i \qquad \text{für } i \leq n_1$$

$$x_r = x_S + \Delta ru \cdot n_1 + (i-n_1) \cdot \Delta rd \qquad \text{für } n_1 < i \leq n_1 + n_2$$

Die Z-Koordinate $z_l$ des Anfangspunkts jeder Rasterzeile ergibt sich aus der Z-Koordinate $z_S$ des Startpunkts $P_{Start}$, der Nummer $i$ der Rasterzeile sowie den vorgegebenen Neigungen der Dreiecksfläche zur X-Achse und zur Y-Achse:

$$z_l = z_S - i \cdot \Delta zy + (x_l - x_S) \cdot \Delta zx$$

Die Baugruppe 3 gibt dann den vorgegebenen Neigungswert $\Delta zy$ der Dreiecksfläche sowie die Koordinaten von Anfangspunkt $(x_l, y_l, z_l)$ und Endpunkt $(x_r, y_r, z_r)$ jeweils einer Rasterzeile an eine nachgeschaltete Baugruppe 4 (engl. PCC - Pixel Coordinate Calculator), die die einzelnen Rasterzeilen in eine Vielzahl von Rasterelementen aufteilt und deren Koordinaten berechnet. Da die Rasterzeilen parallel zur X-Achse verlaufen, ist die Y-Koordinate jedes Rasterelements gleich der Y-Koordinate der zugehörigen Rasterzeile:

$$y_j = y_l$$

Die X-Koordinate jedes Rasterelements ergibt sich aus der X-Koordinate $x_l$ des Anfangspunkts der Rasterzeile, und der Nummer $j$ des Rasterelements in der Rasterzeile:

$$x_j = x_l + j$$

Die Z-Koordinate eines Rasterelements läßt sich in einfacher Weise aus der Z-Koordinate $z_l$ des Anfangspunkts der zugehörigen Rasterzeile, der Nummer $j$ des Rasterelements innerhalb der Rasterzeile und der Neigung $\Delta zx$ der Dreiecksfläche relativ zur X-Achse berechnen:

$$z_j = z_l + j \cdot \Delta zx$$

Die Baugruppe 4 berechnet also für jedes Rasterelement der Polygonfläche die Koordinaten, was Voraussetzung für eine spätere Berechnung des Bildeindrucks entsprechend einem lokalen Beleuchtungsmodell ist.

Der von dem übergeordneten Grafiksystem gelieferte Parametersatz, der die räumliche Lage jeweils eines Dreiecks wiedergibt, wird darüber hinaus einer weiteren Baugruppe 5 (engl. Normal Vector Initializer) zugeführt, welche die Komponenten $(xn_l, yn_l, zn_l)$ des Normalenvektors $N_l$ am Anfangspunkt jeder Rasterzeile berechnet. Der übernommene Parametersatz enthält hierzu die Komponenten $(xn_s, yn_s, zn_s)$ des Normalenvektors $N_S$ an dem vorgegebenen Eckpunkt $P_{Start}$ sowie die Vektorinkremente $\Delta N_x = (\Delta xn_x, \Delta yn_x, \Delta zn_x)$ und $\Delta N_y = (\Delta xn_y, \Delta yn_y, \Delta zn_y)$. Das Vektorinkrement $\Delta N_y$ gibt hierbei die Änderung des Normalenvektors beim Übergang zur jeweils nächsten Rasterzeile wieder, während das Vektorinkrement $\Delta N_x$ die Änderung des Normalenvektors zwischen zwei Rasterelementen einer Rasterzeile bestimmt.

Der Normalenvektor am Anfangspunkt einer Rasterzeile errechnet sich dann aus dem vorgegebenen Normalenvektor $N_{Start}$ an dem vorgegebenen Eckpunkt $P_{Start}$ des Dreiecks, der X-Koordinate $x_l$ des Anfangspunkts der Rasterzeile sowie aus den Vektorinkrementen $\Delta N_x$, $\Delta N_y$ und der Nummer $i$ der Rasterzeile:

$$N_{li} = N_{Start} + i\Delta N_y + (x_l - X_{Start})\Delta N_x$$

oder in Komponentenschreibweise:

$$xn_l = xn_S + i\Delta xn_y + (x_l - x_{Start})\Delta xn_x$$

$$yn_l = yn_s + i\Delta yn_y + (x_l - x_{start})\Delta yn_x$$

$$zn_l = zn_s + i\Delta zn_y + (x_l - x_{Start})\Delta zn_x$$

Die Baugruppe 5 gibt dann für jeweils eine Rasterzeile die Komponenten des Normalenvektors am Anfangspunnkt der Rasterzeile sowie das Vektorinkrement $\Delta\boldsymbol{N}_x$ an eine nachgeschaltete Baugruppe 6 (engl. NVC - Normal Vector Calculator), die für jedes Rasterelement innerhalb der aktuellen Rasterzeile die lokale Flächennormale berechnet, die sich aus dem Normalenvektor $\boldsymbol{N}_{li}$ am Anfangspunkt der Rasterzeile, der Nummer $j$ des Rasterelements innerhalb der Rasterzeile sowie dem Vektorinkrement $\Delta\boldsymbol{N}_x$ nach der Formel

$$N = N_{li} + j\Delta N_x$$

oder in Komponentenschreibweise

$$xn = xn_l + j\Delta xn_x$$

$$yn = yn_l + j\Delta yn_x$$

$$zn = zn_l + j\Delta zn_x$$

ergibt.

Die von der Baugruppe 4 berechneten Koordinaten jeweils eines Rasterelements sowie die von der Baugruppe 6 ermittelten Komponenten des Normalenvektors am Ort des jeweiligen Rasterelements werden dann einer weiteren Baugruppe 7 zugeführt, die entsprechend einem lokalen Beleuchtungsmodell den Bildeindruck des jeweiligen Rasterelements berechnet. Neben der Information über die räumliche Position und die Ausrichtung des jeweiligen Rasterelements benötigt die Baugruppe 7 hierzu Informationen über die Beleuchtungssituation sowie über die gewünschte Perspektive.

Die Beleuchtungssituation wird hierbei durch die räumliche Position sowie die Hauptstrahlrichtung mehrerer virtueller Lichtquellen bestimmt, wobei die Daten eines Teils der Lichtquellen in einem ersten Speicherelement 8.1 und die Daten der restlichen Lichtquellen in einem zweiten Speicherelement 8.2 abgelegt sind. Die Aufteilung und separate Speicherung der Lichtquellen dient zur Verringerung des Berechnungsaufwands, indem in jedem Rasterelement entweder nur der erste Teil der Lichtquellen oder nur der zweite Teil der Lichtquellen entsprechend dem lokalen Beleuchtungsmodell berücksichtigt wird. Der Einfluß der in einem Rasterelement nicht berücksichtigten Lichtquellen wird dann nachträglich - wie im folgenden noch beschrieben wird - durch Interpolation der Bildinformationswerte der benachbarten Rasterelemente ermittelt. Die Auswahl der jeweils zu berücksichtigenden Lichtquellen erfolgt durch einen Multiplexer 9, der bei jedem neuen Rasterelement von der Baugruppe-6 getriggert wird und entweder die in dem einen Speicherelement 8.1 oder dem anderen Speicherelement 8.2 gespeicherten Lichtquellendaten weiterleitet, so daß die Baugruppe 7 abwechselnd die Daten der ersten und der zweiten Gruppe der Lichtquellen zur Berücksichtigung in dem lokalen Beleuchtungsmodell erhält.

Darüber hinaus übernimmt die Baugruppe 7 von dem übergeordneten Grafiksystem über den Systembus 2 einen Parametersatz $e_x$, $e_y$, $e_z$, der die Position eines virtuellen Betrachters und damit die gewünschte Perspektive bestimmt.

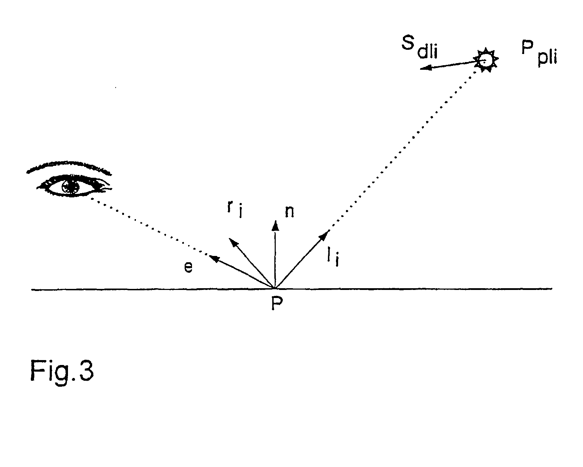

Die Berechnung des Bildeindrucks des jeweiligen Rasterelements erfolgt dann durch die Baugruppe 7 getrennt für die drei Grundfarben Rot, Grün und Blau des RGB-Farbmodells entsprechend dem in Figur 3 schematisch dargestellten Phong'schen Beleuchtungsmodell nach der Formel:

$$c = e_{cm} + a_{cm} \cdot a_{cs} + \sum_{i=0}^{n-1} (att_i)(spot_i)\left[a_{cm} \cdot a_{cli} + \left(\vec{n} \cdot \vec{l}_i\right)d_{cm} \cdot d_{cli} + \left(\vec{r}_i \cdot \vec{e}\right)^{s_{rm}} s_{cm} \cdot s_{cli}\right]$$

$$\Leftrightarrow c = c_{Ofs} + \sum_{i=0}^{n-1} light_i$$

mit

| | |
|---|---|
| $c$ | Farbeindruck des jeweiligen Rasterelements, |
| $i$ | Nummer der jeweiligen Lichtquelle, |
| $n$ | Anzahl der Lichtquellen, |
| $C_{Ofs} = e_{cm} + a_{cm} \cdot a_{cs}$ | lichtquellenunabhängiger Anteil, |
| $e_{cm}$ | emissive Farbe des Materials, |
| $a_{cm}, d_{cm}, s_{cm}$ | ambiente, diffuse bzw. spekulare Farbe des Materials, |

$$light_i = (att_i)(spot_i)\left[ a_{cm} \cdot a_{cli} + (\vec{n} \cdot \vec{l}_i) d_{cm} \cdot d_{cli} + (\vec{r}_i \cdot \vec{e})^{s_{rm}} s_{cm} \cdot s_{cli} \right]$$

Anteil der i-ten Lichtquelle,

$$att_i = \frac{1}{k_{0i} + k_{1i} \|\vec{l}_i\| + k_{2i} \|\vec{l}_i\|^2}$$

Entfernungsabschächung der i-ten Lichtquelle,

$$spot_i = \begin{cases} -\left(\vec{l}_i \cdot \vec{s}_{dli}\right)^{s_{rli}} \\ 0 \end{cases}$$

Rasterelement innerhalb des Cutoff-Winkels $c_{rli}$ sonst
Spotlight-Abschwächung der i-ten Lichtquelle,

| | |
|---|---|
| $s_{rm}$ | spekularer Exponent des Materials, |
| $a_{cli}, d_{cli}, s_{cli}$ | ambiente, diffuse bzw. spekulare Farbe von Lichtquelle $i$, |
| $P_{pli}$ | Position von Lichtquelle $i$, |
| $s_{dli}$ | Hauptabstrahlrichtung von Lichtquelle $i$, |
| $s_{rli}$ | Spotlight-Exponent von Lichtquelle $i$, |
| $c_{rli}$ | Spotlight-Cutoff-Winkel von Lichtquelle $i$, |
| $k_{0i}, k_{1i}, k_{2i}$ | konstante, lineare und quadratische Entfernungsabschwächung von Lichtquelle $i$, |
| $a_{cs}$ | ambiente Farbe der Szene, |

Unter Berücksichtigung der Aufteilung der Lichtquellen in zwei Gruppen von Lichtquellen "Lights1" und "Lights2" folgt dann für die Berechnung der Farbe aus den obigen Gleichungen:

$$c = c_{Ofs} + \sum_{i=0}^{n-1} light_i = c_{Ofs} + \sum^{Lights1} light_i + \sum^{Lights2} light_i = c_{Ofs} + c_{Lights1} + c_{Lights2}$$

Die Baugruppe 7 berechnet für jedes Rasterelement jeweils nur den lichtquellenunabhängigen Anteil $c_{Ofs}$ und den Anteil $c_{Lights1}$ oder $c_{Lights2}$ für die von dem Multiplexer 9 zugeführten Lichtquellendaten. Der Anteil $c_{Lights2}$ bzw. $c_{Lights1}$, der sich aus den Daten der anderen Lichtquellengruppe ergibt, wird anschließend durch Interpolation berücksichtigt.

Hierzu werden die von der Baugruppe 7 berechneten Farb- bzw. Helligkeitswerte $c_{Ofs}$ und $c_{Lights1}$ bzw. $c_{Lights2}$ zwei hintereinander geschalteten FIFO-Speichern 10.1, 10.2 (FIFO - first in, first out) zugeführt, so daß in der Recheneinheit 1 die zuvor von der Baugruppe 7 berechneten Farbwerte $c_{Lights1}$ bzw. $c_{Lights2}$ mehrerer Taktschritte j-1, j, und j+1 zur Interpolation verfügbar sind, wobei jeder Taktschritt einem Rasterelement zugeordnet ist.

Figur 1 gibt den Zustand der Recheneinheit für geradzahlige Taktschritte j an. In diesem Fall erscheint am Ausgang des FIFO-Speichers 10.1 der lichtquellenunabhängige Anteil $c_{Ofs,j}$ und der Anteil $c_{Lights2,j}$ der zweiten Lichtquellengruppe für den Takt j. Der Anteil $c_{Lights1,j}$ der ersten Lichtquellengruppe wird für diesen Taktschritt durch Interpolation ermittelt. Hierzu wird der Farbwertanteil $c_{Lights1,j+1}$ des vorangegangenen Taktschrittes j+1 und der Farbwertanteil $c_{Lights1,j-1}$ des nächsten Taktschrittes j-1 einer Recheneinheit 11 zugeführt, die daraus den Farbwertanteil $c_{Lights1,j}$ für den Takt j nach der Formel

$$c_{Lights1,j} = \frac{1}{2} \cdot (c_{Lights1,j-1} + c_{Lights1,j+1})$$

interpoliert und in einen FIFO-Speicher 12 schreibt. Im nächsten Taktschritt j+1 werden dann die in dem FIFO-Speicher 10.2 zwischengespeicherten Farbwertanteile $c_{Ofs,j+1}$ und $c_{Lights2,j+1}$ sowie der in dem FIFO-Speicher 12 festgehaltene Farbwertanteil $c_{Lights1,j+1}$ herausgeschoben und einem Addierer 13 zugeführt, der daraus den endgültigen Farbwert $C_{j+1}$ nach der Formel

$$c_{j+1} = c_{Ofs,j+1} + c_{Lights1,j+1} + c_{Lights2,j+1}$$

berechnet.

Bei ungeradzahligen Taktschritten j erscheint am Ausgang des FIFO-Speichers 10.1 dagegen der lichtquellenunabhängige Farbwertanteil $c_{Ofs,j}$ und der Anteil $c_{Lights1,j}$ der ersten Lichtquellengruppe, wohingegen der Anteil $c_{Lights2,j}$ interpoliert wird.

Zur Darstellung auf einem Bildschirm 14 ist es weiterhin erforderlich, die dreidimensionalen Koordinaten der einzelnen Rasterelemente in ein zweidimensionales Bildschirmkoordinatensystem umzurechnen, das die Position des jeweiligen Rasterelements auf einem Bildschirm angibt. Die von der Baugruppe 4 berechneten Koordinaten werden deshalb einer auch als Z-Filter bezeichneten Baugruppe 15 zugeführt, die die verdeckten und damit nicht sichtbaren Rasterelemente unterdrückt und nur die Bildschirmkoordinaten der sichtbaren Rasterelemente weitergibt.

Annschließend wird der Bildschirmkoordinatensatz durch zwei hintereinandergeschaltetete FIFO-Speicher 16.1, 16.2 hindurchgeschoben und damit um zwei Berechnungstakte verzögert, um die Verzögerung durch die Interpolation der Bildinformationswerte auszugleichen.

Der Bildschirmkoordinatensatz dient dann zur Adressierung eines Bildschirmspeichers 17, der die Bildinformationswerte c der einzelnen Rasterelemente von dem Addierer 13 übernimmt.

Nach der Berechnung sämtlicher Rasterelemente aller Polygonflächen enthält der Bildschirmspeicher 17 ein perspektivisches Bild der virtuellen räumlichen Szene. Die Wiedergabe dieses Bildes erfolgt dann durch eine eingangsseitig mit dem Bildschirmspeicher 17 verbundene Bildschirmtreiberschaltung 18 und den Monitor 14.

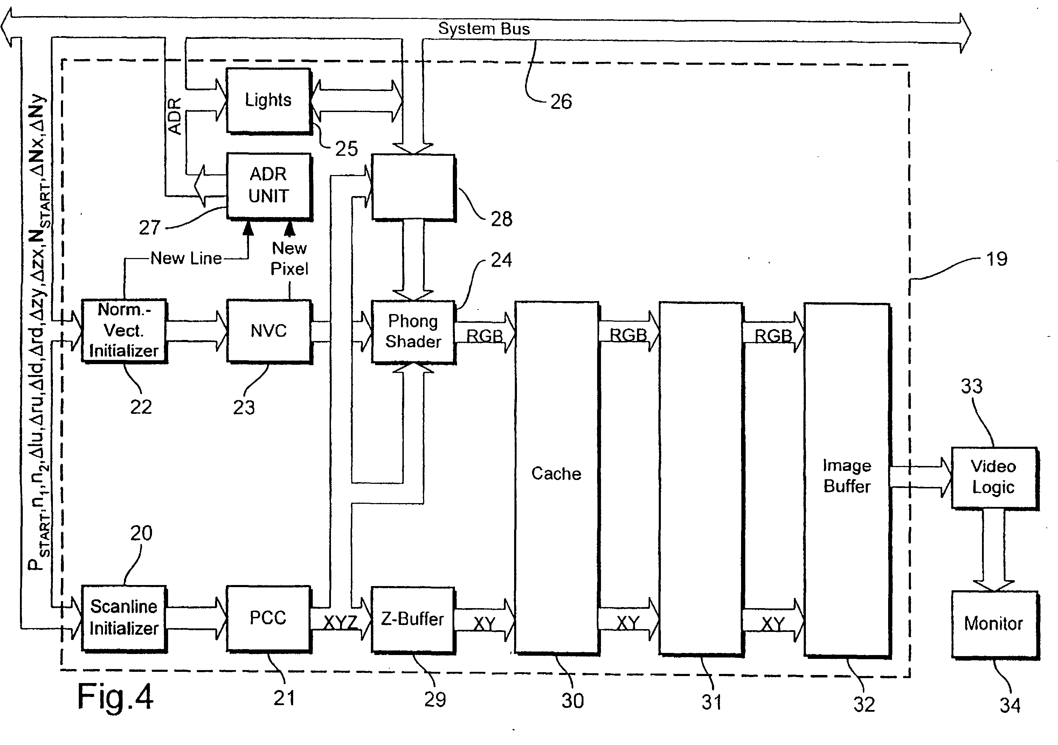

Figur 4 zeigt ebenfalls eine Recheneinheit 19, die als Bestandteil eines umfassenden Grafiksystems eine Darstellung von computermodelierten Objekten ermöglicht, die in Form eines Gittermodells vorliegen. Das übergeordnete Grafiksystem liefert hierbei - wie bei der in Figur 1 dargestellten und vorstehend beschriebenen Recheneinheit - jeweils einen Parametersatz an die Recheneinheit 19, der unter anderem die räumliche Lage und die optischen Eigenschaften (Farbe, Reflexionsverhalten etc.) jeweils einer Polygonfläche definiert. Die dargestellte Recheneinheit 19 teilt die jeweilige Polygonfläche dann anhand des übergebenen Parametersatzes in eine Vielzahl von Rasterzeilen auf und berechnet mittels einer Baugruppe 20 für jede Rasterzeile die Koordinaten des Anfangspunkte und des Endpunktes. Anschließend wird dann jede Rasterzeile in zahlreiche Rasterelemente aufgeteilt, deren Koordinaten von einer weiteren Baugruppe 21 in der bereits vorstehend beschriebenen Weise berechnet werden. Darüber hinaus wird der von dem übergeordneten Grafiksystem übergebene Parametersatz einer weiteren Baugruppe 22 zugeführt, die für jede Rasterzeile zunächst die lokale Flächennormale am Anfangspunkt der Rasterzeile berechnet. Mittels einer nachgeschalteten Baugruppe 23 wird dann für jedes Rasterelement innerhalb der Polygonfläche die lokale Flächennormale berechnet, so daß der Bildeindruck jedes Rasterelements nachfolgend entsprechend einem lokalen Beleuchtungsmodell von einer Baugruppe 24 berechnet werden kann.

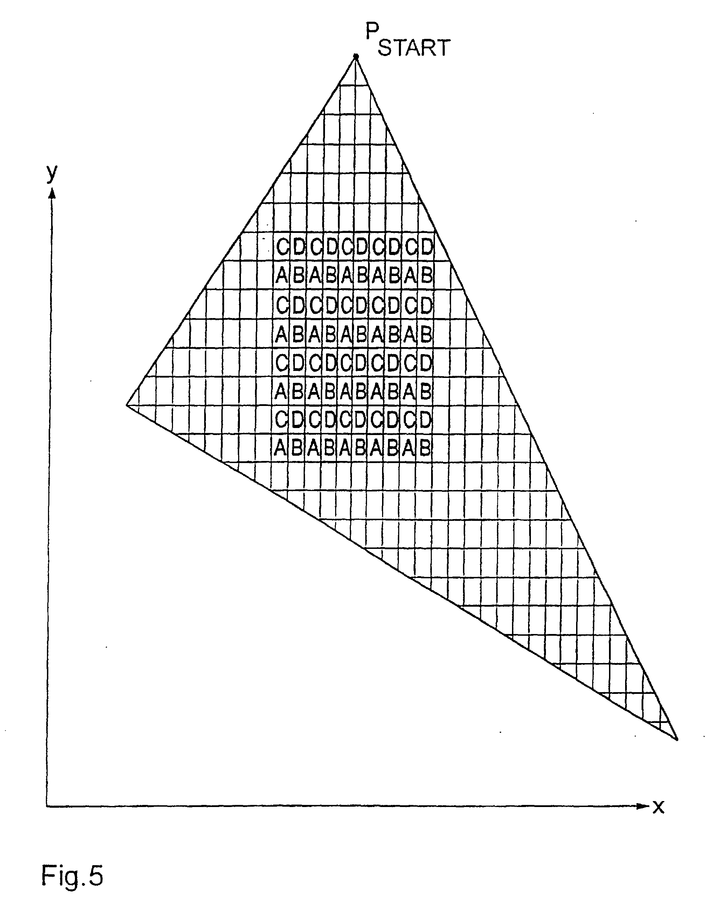

Die Beleuchtungssituation wird hierbei von dem übergeordneten Grafiksystem vorgegeben und in einem Speicherelement 25 abgespeichert. Hierzu übernimmt die Recheneinheit 19 über einen Bus 26 die Koordinaten der einzelnen Lichtquellen, die jeweilige Hauptabstrahlrichtung sowie Intensität und Farbe der einzelnen Lichtquellen und legt diese Daten in dem Speicherelement 25 ab. Zur Verringerung des Berechnungsaufwands bei der Berechnung des lokalen Beleuchtungsmodells wird hierbei in jedem Rasterelement jeweils nur ein Teil der Lichtquellen berücksichtigt, die in Abhängigkeit von der Lage des jeweiligen Rasterelements ausgewählt werden. Die Auswahl der Lichtquelle erfolgt hierbei durch eine Adressierungseinheit 27, die zu Beginn jeder Rasterzeile und bei jedem neuen Rasterelement jeweils einen Steuerimpuls von der Baugruppe 22 bzw. 23 erhält. Die Adressierungseinheit 27 ändert also die Auswahl der zu berücksichtigenden Lichtquellen bei jedem Rasterelement. Darüber hinaus werden auch in jeder neuen Rasterzeile andere Lichtquellen berücksichtigt als in der vorangegangenen Rasterzeile. Die Lichtquellen sind hierbei in vier Gruppen A, B, C, D eingeteilt. In den ungeradzahligen Rasterzeilen werden in den geradzahligen Rasterelementen jeweils die Lichtquellen der Grupppe A und in den ungeradzahligen Rasterelementen die Lichtquellen der Gruppe B berücksichtigt. In den geradzahligen Rasterzeilen werden dagegen in den geradzahligen Rasterelementen die Lichtquellen der Gruppe C und in den ungeradzahligen Rasterelementen jeweils die Lichtquellen der Gruppe D berücksichtigt, wie in Figur 5 exemplarisch dargestellt ist.

Der Rechenaufwand wird weiter herabgesetzt, indem lediglich solche Lichtquellen berücksichtigt werden, deren Intensität am Ort des jeweiligen Rasterelements einen vorgegebenen Grenzwert nicht unterschreitet. Hierzu ist eine weitere Baugruppe 28 vorgesehen, die eingangseitig mit dem Speicherelement 25 verbunden ist und die Daten sämtlicher Lichtquellen übernimmt, die von der Adressierungseinheit 27 für das jeweilige Rasterelement ausgewählt wurden. Darüber hinaus ist diese Baugruppe 28 mit der Baugruppe 21 verbunden, die die Koordinaten der einzelnen Rasterelemente berechnet. Die Baugruppe 28 berechnet dann zum einen die Entfernungsabschwächung, die sich direkt aus dem Abstand zwischen der jeweiligen Lichtquelle und dem Rasterelement ergibt und quadratisch mit der Entfernung zunimmt. Überschreitet die Entfernungsabschwächung den vorgegebenen Grenzwert, so wird die jeweilige Lichtquelle bei der Berechnung des lokalen Beleuchtungsmodells nicht berücksichtigt. Darüber hinaus wird die sogenannte Spotlight-Abschwächung berechnet, die darauf beruht, daß die wahrgenommene Intensität einer Lichtquelle mit zunehmender Entfernung von der Hauptabstrahlrichtung abnimmt. Die Baugruppe 28 berechnet deshalb den Winkel zwischen der Hauptabstrahlrichtung der einzelnen Lichtquellen und der Verbindungslinie zwischen der jeweiligen Lichtquelle und dem Rasterelement. Überschreitet dieser Winkel einen vorgegebenen Grenzwert, so ist die Spotlight-Abschwächung zu stark und die Lichtquelle wird bei der Berechnung des lokalen Beleuchtungsmodells nicht berücksichtigt.

Am Ausgang der Baugruppe 24 erscheinen also die Bildinformationswerte der Rasterelemente, die sich aus der jeweiligen Perspektive und der vorgegebenen Beleuchtungssituation entsprechend dem lokalen Beleuchtungsmodell ergeben.

Darüber hinaus weist die Recheneinheit 19 eine auch als Z-Buffer bezeichnete Baugruppe 29 auf, welche die verdeckten Rasterelemente unterdrückt und lediglich die Bildschirmkoordinaten der sichtbaren Rasterelemente weiterleitet. Diese Bildschirmkoordinatensätze dienen zur Ansteuerung eines Zwischenspeichers 30 ("Cache"), in dem dann die von der Baugruppe 24 berechneten Bildinformationswerte abgespeichert werden.

Bei der Berechnung der einzelnen Bildinformationswerte wurde - wie vorstehend detailliert beschrieben - in den einzelnen Rasterelementen jeweils nur ein Teil der Lichtquellen berücksichtigt, so daß der Inhalt des Zwischenspeichers 30 den korrekten Bildeindruck nur näherungsweise wiedergibt. Die Recheneinheit 19 weist deshalb eine dem Zwischenspeicher 30 nachgeschaltete weitere Baugruppe 31 auf, welche die in dem Zwischenspeicher 30 abgelegten Bildinformationswerte interpoliert, damit in jedem Rasterelement bzw. in jedem Speicherplatz des Zwischenspeichers 30 sämtliche relevante Lichtquellen berücksichtigt werden. Die Baugruppe 31 liest hierbei für jedes Rasterelement die Bildinformationswerte der benachbarten Rasterelemente derselben Rasterzeile sowie die Bildinformationswerte der benachbarten Rasterelemente in den unmittelbar angrenzenden Rasterzeilen aus und berechnet daraus durch Interpolation einen verbesserten Bildinformationswert, der nun den Einfluß sämtlicher Lichtquellen berücksichtigt. Die Bildinformationswerte werden dann von der Baugrupe 31 in den Bildschirmspeicher 32 geschrieben und über eine Bildschrimtreiberschaltung 33 und einen Monitor 34 dargestellt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

**Patentansprüche**

1. Bilddarstellungsverfahren zur Darstellung von computermodellierten Objekten, die in Form eines Gittermodells vorliegen und durch mehrere Polygonflächen nachgebildet werden, bei dem
   mittels einer ersten Baugruppe (3, 4, 20, 21) einer Recheneinheit (1, 19) aus einem die räumliche Lage jeweils einer der Polygonflächen repräsentierenden ersten Parametersatz eine Vielzahl von ersten Koordinatensätzen berechnet wird, die die räumliche Lage jeweils eines Rasterelements der jeweiligen Polygonfläche repräsentieren,
   mittels einer zweiten Baugruppe (5, 6, 22, 23) der Recheneinheit (1, 19) für jedes Rasterelement der Polygonfläche aus dem die räumliche Lage der Polygonfläche repräsentierenden ersten Parametersatz jeweils ein zweiter Koordinatensatz berechnet wird, der die räumliche Lage und Richtung der lokalen Flächennormale repräsentiert,

mittels einer dritten Baugruppe (7, 24) der Recheneinheit (1, 19) aus einem die räumliche Lage sowie die optischen Eigenschaften mindestens einer ersten Lichtquelle repräsentierenden zweiten Parametersatz sowie aus den die räumliche Lage der einzelnen Rasterelemente repräsentierenden ersten Koordinatensätzen und den die räumliche Lage der lokalen Flächennormalen repräsentierenden zweiten Koordinatensätzen entsprechend einem lokalen Beleuchtungsmodell Bildinformationswerte berechnet werden, die den Bildeindruck jeweils eines Rasterelements wiedergeben,

mittels einer vierten Baugruppe (4, 21) der Recheneinheit (1, 19) für jedes Rasterelement aus dem die räumliche Lage des jeweiligen Rasterelements repräsentierenden ersten Koordinatensatz zur Darstellung auf einem Bildschirm (14, 34) ein zweidimensionaler Bildschirmkoordinatensatz berechnet wird, der die Position des Rasterelements auf dem Bildschirm (14, 34) bestimmt,

**dadurch gekennzeichnet,**

**daß** von sämtlichen Rasterelementen der jeweiligen Polygonfläche ein erster Teil ausgewählt wird und die Bildinformationswerte von der dritten Baugruppe (7, 24) für sämtliche Rasterelemente des ersten Teils entsprechend dem lokalen Beleuchtungsmodell oder einem Teil des lokalen Beleuchtungsmodells berechnet werden,

**daß** anschließend für einen die restlichen Rasterelemente der Polygonfläche umfassenden zweiten Teil der Rasterelemente die Bildinformationswerte aus den zuvor für den ersten Teil der Rasterelemente berechneten Bildinformationswerten mittels einer fünften Baugruppe (11, 13, 31) interpoliert werden.

2. Verfahren nach Anspruch 1, **dadurch gekennzeichnet, daß** die Bildinformationswerte in jedem Rasterelement aus einem interpolierten Anteil und einem entsprechend dem lokalen Beleuchtungsmodell berechneten Anteil zusammengesetzt werden,

wobei in dem ersten Teil der Rasterelemente jeweils die durch den zweiten Parametersatz definierten Lichtquellen durch Berechnung des lokalen Beleuchtungsmodells und die durch einen dritten Parametersatz definierten Lichtquellen durch Interpolation berücksichtigt werden und

in dem zweiten Teil der Rasterelemente jeweils die die durch den zweiten Parametersatz definierten Lichtquellen durch Interpolation und die durch den dritten Parametersatz definierten Lichtquellen durch Berechnung des lokalen Beleuchtungsmodell berücksichtigt werden.

3. Verfahren nach Anspruch 1 oder 2, **dadurch gekennzeichnet, daß** die Rasterelemente innerhalb der einzelnen Polygonflächen in Rasterzeilen angeordnet sind.

4. Verfahren nach Anspruch 3, **dadurch gekennzeichnet, daß** die Rasterelemente der einzelnen Rasterzeilen abwechselnd dem ersten Teil und dem zweiten Teil zugeordnet werden.

5. Verfahren nach einem der vorhergehenden Ansprüche, **dadurch gekennzeichnet, daß** die Interpolation des Bildinformationswertes eines Rasterelements einer Rasterzeile aus den zuvor entsprechend dem lokalen Beleuchtungsmodell oder einem Teil des lokalen Beleuchtungsmodells berechneten Bildinformationswerten mindestens zweier benachbarter Rasterelemente derselben Rasterzeile erfolgt.

6. Verfahren nach einem der vorhergehenden Ansprüche, **dadurch gekennzeichnet, daß** die Interpolation des Bildinformationswertes eines Rasterelements einer Rasterzeile aus den zuvor entsprechend dem lokalen Beleuchtungsmodell oder einem Teil des lokalen Beleuchtungsmodells berechneten Bildinformationswerten mindestens zweier benachbarter Rasterelemente derselben Rasterzeile und aus den zuvor entsprechend dem lokalen Beleuchtungsmodell oder einem Teil des lokalen Beleuchtungsmodells berechneten Bildinformationswerten mindestens zweier benachbarter Rasterelemente in benachbarten Rasterzeilen erfolgt.

7. Verfahren nach einem der vorhergehenden Ansprüche, **dadurch gekennzeichnet, daß** die entsprechend dem lokalen Beleuchtungsmodell berechneten Bildinformationswerte der Rasterelemente mehrerer Rasterzeilen nach der Berechnung in einem Zwischenspeicher (11, 12, 30) abgelegt werden und anschließend für die Interpolation der Bildinformationswerte der anderen Rasterelemente aus dem Zwischenspeicher (11, 12, 30) ausgelesen werden.

8. Verfahren nach einem der vorhergehenden Ansprüche, **dadurch gekennzeichnet, daß** der die räumliche Lage und die optischen Eigenschaften mindestens der ersten Lichtquelle repräsentierende zweite Parametersatz und/oder der die räumliche Lage und die optischen Eigenschaften mindestens der zweiten Lichtquelle repräsentierende dritte Patemetersatz individuell für jedes Rasterelement oder jede Rasterzeile oder jede Polygonfläche mittels einer sechsten Baugruppe (28) der Recheneinheit (1, 19) aus einem die räumliche Lage sowie die optischen Eigenschaften einer Vielzahl von Lichtquellen repräsentierenden vierten Parametersatz ermittelt wird, wobei die sechste Baugruppe (28) für die einzelnen Lichtquellen die Entfernungsabschwächung und/oder die Spot-Light-Abschwächung berechnet und die Lichtquellen mit der geringsten Abschwächung am Ort des Rasterelements oder der Rasterzeile oder der Polygonfläche auswählt.

9. Verfahren nach Anspruch 8, **dadurch gekennzeichnet, daß** die sechste Baugruppe (28) die Entfernungsabschwächung und/oder die Spot-Light-Abschwächung in jeder Rasterzeile einmal für sämtliche Lichtquellen berechnet und die Lichtquellen in Abhängigkeit von der berechneten Entfernungsabschächung und/oder Spot-Light-Abschwächung in relevante und irrelevante Lichtquellen einteilt,
daß die sechste Baugruppe (28) in jedem Rasterelement die Entfernungsabschächung und/oder die Spot-Light-Abschwächung für alle relevanten Lichtquellen berechnet und die Lichtquellen beim Überschreiten eines Grenzwerts für die Entfernungsabschwächung und/oder die Spot-Light-Abschwächung als irrelevant einteilt,
daß die sechste Baugruppe (28) in jedem Rasterelement die Entfernungsabschächung und/oder die Spot-Light-Abschwächung für eine der irrelevanten Lichtquellen berechnet und diese Lichtquelle beim Unterschreiten eines vorgegebenen Grenzwerts für die Entfernungsabschwächung und/oder die Spot-Light-Abschwächung als relevant einteilt.

10. Verfahren nach Anspruch 8 oder 9, **dadurch gekennzeichnet, daß** die Berechnung des die räumliche Lage und die optischen Eigenschaften mindestens der ersten Lichtquelle repräsentierenden zweiten Parametersatzes und/oder des die räumliche Lage und die optischen Eigenschaften mindestens der zweiten Lichtquelle repräsentierende dritten Parametersatzes aus dem die räumliche Lage und die optischen Eigenschaften einer Vielzahl von Lichtquellen repräsentierenden vierten Parametersatz bei einer Bewegtbilddarstellung jeweils nach einer vorgegebenen Zahl von Bildwechseln erfolgt, wobei der erste Parametersatz und/oder der zweite Paremetersatz zwischen den aktualisierenden Berechnungen in einem Speicherelement für den Zugriff durch die dritte Baugruppe (7, 24) festgehalten wird.

11. Verfahren nach einem der vorhergehenden Ansprüche, **dadurch gekennzeichnet, daß** die Bildinformationswerte des zweiten Teils der Rasterelemente jeweils durch ein Polynom aus den Bildinformationswerten mehrerer Rasterelemente des zweiten Teils interpoliert werden.

12. Verfahren nach einem der vorhergehenden Ansprüche, **dadurch gekennzeichnet,**
**daß** für benachbarte Rasterelemente des ersten Teils der Rasterelemente die Differenz der Bildinformationswerte berechnet wird und mit einem vorgegebenen Grenzwert verglichen wird,
**daß** bei einem Überschreiten der berechneten Differenz der Bildinformationswerte für mindestens ein Rasterelement des zweiten Teils der Rasterelemente der Bildinformationswert entsprechend dem lokalen Beleuchtungsmodell berechnet wird.

13. Vorrichtung zur Durchführung des Bilddarstellungsverfahrens nach einem der vorhergehenden Ansprüche, mit einem Eingang zur Aufnahme eines die räumliche Lage jeweils einer der Polygonflächen repräsentierenden ersten Parametersatzes und eines die räumliche Lage und die optischen Eigenschaften mindestens einer ersten Lichtquelle repräsentierenden zweiten Parametersatzes,
einer mit dem Eingang verbundenen Recheneinheit (1, 19) mit einer ersten Baugruppe (3, 4, 20, 21) zur Berechnung einer Vielzahl von die räumliche Lage jeweils eines Rasterelements der jeweiligen Polygonfläche repräsentierenden ersten Koordinatensätzen aus dem ersten Parametersatz,
einer zweiten Baugruppe (5, 6, 22, 23) zur Berechnung von die räumliche Lage der lokalen Flächennormalen in den einzelnen Rasterelementen repräsentierenden zweiten Koordinatensätzen in Abhängigkeit von dem ersten Parametersatz,
einer dritten Baugruppe (7, 24) zur Berechnung von den Bildeindruck jeweils eines Rasterelements wiedergebenden Bildinformationswerten entsprechend einem lokalen Beleuchtungsmodell in Abhängigkeit von dem die räumliche Lage der ersten Lichtquelle wiedergebenden zweiten Parametersatz und dem die räumliche Lage des jeweiligen Rasterelements repräsentierenden ersten Koordinatensatz sowie dem die räumliche Lage der lokalen Flächennormale repräsentierenden zweiten Koordinatensatz sowie
einer vierten Baugruppe (4, 21) zur Berechnung eines zweidimensionalen Bildschirmkoordinatensatzes für jedes Rasterelement aus dem die räumliche Lage des Rasterelements repräsentierenden ersten Koordinatensatz,
**dadurch gekennzeichnet,**
**daß** die Recheneinheit (1, 19) zur Interpolation von Bildinformationswerten einzelner Rasterelemente aus den zuvor entsprechend dem lokalen Beleuchtungsmodell berechneten Bildinformationswerten benachbarter Rasterelemente eine fünfte Baugruppe (10.1 bis 13, 31) aufweist, die eingangsseitig zur Aufnahme der berechneten Bildinformationswerte mit der dritten Baugruppe (7, 24) verbunden ist.

**14.** Vorrichtung nach Anspruch 13, **dadurch gekennzeichnet, daß** die dritte Baugruppe (7, 24) der Recheneinheit (1, 19) zur Zwischenspeicherung der entsprechend dem lokalen Beleuchtungsmodell berechneten Bildinformationswerte für die nachfolgende Interpolation ausgangsseitig mit einem Zwischenspeicher (10.1, 10.2, 30) verbunden ist.

**15.** Vorrichtung nach Anspruch 14, **dadurch gekennzeichnet, daß** der Zwischenspeicher ein FIFO-Speicher (10.1, 10.2) ist.

**16.** Vorrichtung nach einem der Ansprüche 13 bis 15, **dadurch gekennzeichnet,**
**daß** zur Berechnung des die räumliche Lage und die optischen Eigenschaften mindestens der ersten Lichtquelle repräsentierenden zweiten Parametersatzes und/oder des die räumliche Lage und die optischen Eigenschaften mindestens der zweiten Lichtquelle repräsentierenden dritten Parametersatzes individuell für jedes Rasterelement oder jede Rasterzeile oder jede Polygonfläche aus einem die räumliche Lage sowie die optischen Eigenschaften einer Vielzahl von Lichtquellen repräsentierenden vierten Parametersatz eine sechste Baugruppe (28) vorgesehen ist, die für die durch den vierten Paremetersatz definierten Lichtquellen die Entfernungsabschwächung und/oder die Spot-Light-Abschwächung berechnet und die Lichtquellen mit der geringsten Abschwächung am Ort des Rasterelements oder der Rasterzeile oder der Polygonfläche auswählt.

## Claims

**1.** An imaging method for representing computer-modelled objects which are present in the form of a grid model and which are simulated by a plurality of polygonal surfaces, in which
a first assembly (3, 4, 20, 21) of a computing unit (1, 19) is used to calculate from a first parameter set representing the spatial position of a respective one of the polygonal surfaces a plurality of first co-ordinate sets which represent the spatial position of a respective pixel of the respective polygonal surface,
a second assembly (5, 6, 22, 23) of the computing unit (1, 19) is used to calculate for each pixel of the polygonal surface from the first parameter set representing the spatial position of the polygonal surface a respective second co-ordinate set representing the spatial position and direction of the local surface normal,
a third assembly (7, 24) of the computing unit (1, 19) is used to calculate from a second parameter set representing the spatial position and the optical properties of at least a first light source and from the first co-ordinate sets representing the spatial position of the individual pixels and the second co-ordinate sets representing the spatial position of the local surface normals in accordance with a local illumination model image information values which reproduce the image impression of a respective pixel, and
a fourth assembly (4, 21) of the computing unit (1, 19) is used for computing for each pixel from the first co-ordinate set representing the spatial position of the respective pixel for representation on a display screen (14, 34) a two-dimensional display screen co-ordinate set which determines the position of the pixel on the display screen (14, 34),
**characterised in that** a first portion is selected from all pixels of the respective polygon surface and the image information values are calculated by the third assembly (7, 24) for all pixels of the first portion according to the local illumination model or a portion of the local illumination model, and
then for a second portion of the pixels which includes the remaining pixels of the polygonal surface the image information values are interpolated from the image information values previously calculated for the first portion of the pixels by means of a fifth assembly (11, 13, 31).

**2.** A method according to claim 1 **characterised in that** the image information values in each pixel are composed of an interpolated portion and a portion calculated in accordance with the local illumination model,
wherein in the first portion of the pixels the respective light sources defined by the second parameter set are taken into account by calculation of the local illumination model and the light sources defined by a third parameter set are taken into consideration by interpolation, and
in the second portion of the pixels the respective light sources defined by the second parameter set are taken into consideration by interpolation and the light sources defined by the third parameter set are taken into consideration by calculation of the local illumination model.

**3.** A method according to claim 1 or claim 2 **characterised in that** the pixels are arranged within the individual polygonal surfaces in scan lines.

**4.** A method according to claim 3 **characterised in that** the pixels of the individual scan lines are associated alternately with the first portion and the second portion.

5. A method according to one of the preceding claims **characterised in that** interpolation of the image information value of a pixel of a scan line is effected from the image information values previously calculated in accordance with the local illumination model or a portion of the local illumination model by means of two adjacent pixels of the same scan line.

6. A method according to one of the preceding claims **characterised in that** interpolation of the image information value of a pixel of a scan line is effected from the image information values previously calculated in accordance with the local illumination model or a portion of the local illumination model by means of two adjacent pixels of the same scan line and from the image information values, previously calculated in accordance with the local illumination model or a portion of the local illumination model, of at least two adjacent pixels in adjacent scan lines.

7. A method according to one of the preceding claims **characterised in that** the image information values, calculated in accordance with the local illumination model, of the pixels of a plurality of scan lines are stored after calculation in an intermediate memory (11, 12, 30) and then read out of the intermediate memory (11, 12, 30) for interpolation of the image information values of the other pixels.

8. A method according to one of the preceding claims **characterised in that** the second parameter set representing the spatial position and the optical properties of at least the first light source and/or the third parameter set representing the spatial position and the optical properties of at least the second light source are ascertained individually for each pixel or each scan line or each polygonal surface by means of a sixth assembly (28) of the computing unit (1, 19) from a fourth parameter set representing the spatial position and the optical properties of a plurality of light sources, wherein the sixth assembly (28) calculates the distance attenuation and/or the spotlight attenuation for the individual light sources and selects the light sources with the lowest level of attenuation at the location of the pixel or the scan line or the polygonal surface.

9. A method according to claim 8 **characterised in that**
the sixth assembly (28) calculates the distance attenuation and/or the spotlight attenuation in each scan line once for all light sources and divides the light sources into relevant and irrelevant light sources in dependence on the calculated distance attenuation and/or spotlight attenuation,
in each pixel the sixth assembly (28) calculates the distance attenuation and/or the spotlight attenuation for all relevant light sources and classifies the light sources as irrelevant when a limit value for distance attenuation and/or spotlight attenuation is exceeded, and
in each pixel the sixth assembly (28) calculates the distance attenuation and/or the spotlight attenuation for one of the irrelevant light sources and classifies said light source as relevant when the value for distance attenuation and/or spotlight attenuation falls below a predetermined limit value.

10. A method according to claim 8 or claim 9 **characterised in that** calculation of the second parameter set representing the spatial position and the optical properties of at least the first light source and/or the third parameter set representing the spatial position and the optical properties of at least the second light source is effected from the fourth parameter set representing the spatial position and the optical properties of a plurality of light sources in a moving image representation respectively in accordance with a predetermined number of image changes, wherein the first parameter set and/or the second parameter set is retained between the updating calculations in a memory element for access by the third assembly (7, 24).

11. A method according to one of the preceding claims **characterised in that** the image information values of the second portion of the pixels are respectively interpolated by a polynomial from the image information values of a plurality of pixels of the second portion.

12. A method according to one of the preceding claims **characterised in that**
for adjacent pixels of the first portion of the pixels the difference in the image information values is calculated and compared to a predetermined limit value, and
when the calculated difference of the image information values is exceeded for at least one pixel of the second portion of the pixels the image information value is calculated in accordance with the local illumination model.

13. Apparatus for carrying out the imaging method according to one of the preceding claims comprising

an input for receiving a first parameter set representing the spatial position of a respective one of the polygonal surfaces and a second parameter set representing the spatial position and the optical properties of at least a first light source,

a computing unit (1, 19) connected to the input having a first assembly (3, 4, 20, 21) for calculating a plurality of first co-ordinate sets representing the spatial position of a respective pixel of the respective polygonal surface from the first parameter set,

a second assembly (5, 6, 22, 23) for calculating second co-ordinate sets representing the spatial position of the local surface normals in the individual pixels in dependence on the first parameter set,

a third assembly (7, 24) for calculating image information values reproducing the image impression of a respective pixel in accordance with a local illumination model in dependence on the second parameter set reproducing the spatial position of the first light source and the first co-ordinate set representing the spatial position of the respective pixel as well as the second co-ordinate set representing the spatial position of the local surface normal, and

a fourth assembly (4, 21) for calculating a two-dimensional display screen co-ordinate set for each pixel from the first co-ordinate set representing the spatial position of the pixel,

**characterised in that** the computing unit (1, 19) for interpolation of image information values of individual pixels from the image information values of adjacent pixels, previously calculated in accordance with the local illumination model, has a fifth assembly (10.1 to 13, 31) which at the input side is connected to the third assembly (7, 24) for receiving the calculated image information values.

14. Apparatus according to claim 13 **characterised in that** the third assembly (7, 24) of the computing unit (1, 19) is connected on the output side to an intermediate memory (10.1, 10.2, 30) for intermediate storage of the image information values calculated in accordance with a local illumination model for the subsequent interpolation operation.

15. Apparatus according to claim 14 **characterised in that** the intermediate memory is an FIFO memory (10.1, 10.2).

16. Apparatus according to one of claims 13 to 15 **characterised in that** to calculate the second parameter set representing the spatial position and the optical properties of at least the first light source and/or the third parameter set representing the spatial position and the optical properties of at least the second light source individually for each pixel or each scan line or each polygonal surface from a fourth parameter set representing the spatial position and the optical properties of a plurality of light sources there is provided a sixth assembly (28) which calculates the distance attenuation and/or the spotlight attenuation for the light sources defined by the fourth parameter set and selects the light sources with the lowest level of attenuation at the location of the pixel or the scan line or the polygonal surface.

**Revendications**

1. Procédé de représentation d'images pour représenter des objets modélisés par ordinateur, qui sont présents sous la forme d'un modèle en forme de grille et sont simulés par plusieurs surfaces polygonales, selon lequel:

à l'aide d'un premier module (3, 4, 20, 21) d'une unité de calcul (1, 19) on calcule, à partir d'un premier ensemble de paramètres représentant la position spatiale respectivement de l'une des surfaces polygonales, une multiplicité de premiers ensembles de coordonnées, qui représentent la position spatiale respectivement d'un élément de trame de la surface polygonale respective,

à l'aide d'un second module (2, 5, 6, 22, 23) de l'unité de calcul (1, 19), et pour chaque élément de trame de la surface polygonale, on calcule, à partir du premier ensemble de paramètres représentant la position spatiale de la surface polygonale, respectivement un second ensemble de coordonnées, qui représente la position spatiale et la direction spatiale de la normale locale à la surface,

à l'aide d'un troisième module (7, 24) de l'unité de calcul (1, 19), à partir d'un second ensemble de paramètres représentant la position spatiale ainsi que les caractéristiques optiques au moins d'une première source de lumière, ainsi qu'à partir des premiers ensembles de coordonnées représentant la position spatiale des différents éléments de trame, à partir des seconds ensembles de coordonnées représentant la position spatiale de la normale locale à la surface, on calcule, conformément à un modèle local d'éclairement, des valeurs d'information d'image, qui reproduisent l'empreinte de l'image respectivement d'un élément de trame,

à l'aide d'un quatrième module (4, 21) de l'unité de calcul (1, 19), pour chaque élément de trame, on calcule, à partir de la position spatiale à partir du premier ensemble de coordonnées représentant la position spatiale de l'élément de trame respectif, pour la représentation sur un écran (14, 34), un ensemble bidimensionnel de coordonnées d'écran, qui détermine la position de l'élément de trame sur l'écran (14, 34),

**caractérisé en ce**
**qu'**on sélectionne une première partie à partir de tous les éléments de trame de la surface polygonale respective et que les valeurs d'information d'image sont calculées par le troisième module (7, 24) pour tous les éléments de trame de la première partie, conformément au modèle locale d'éclairement ou à une partie du modèle local d'éclairement,
**qu'**ensuite, pour une seconde partie des éléments de trame, qui comprend les autres éléments de trame de la surface polygonale, les valeurs d'information d'image sont interpolées, pour une seconde partie des éléments de trame, qui comprend les autres éléments de trame de la surface polygonale, à partir des valeurs d'information d'image calculées au préalable pour la première partie des éléments de trame, à l'aide d'un cinquième module (11, 13, 31).

2. Procédé selon la revendication 1, **caractérisé en ce que** les valeurs d'information d'image dans chaque élément de trame sont formées par la réunion d'une partie interpolée et d'une partie calculée conformément au modèle local d'éclairement,
selon lequel dans la première partie des éléments de trame, respectivement les sources de lumière définies par le second ensemble de paramètres sont prises en compte par calcul du modèle local d'éclairement et les sources d'énergie définies par un troisième ensemble de paramètre sont prises en compte par interpolation, et
dans la deuxième partie des éléments de trame, respectivement les sources de lumière définissant le second ensemble de paramètres sont prises en compte par interpolation et les sources de lumière définies par le troisième ensemble de paramètres sont prises en compte par calcul du modèle local d'éclairement.

3. Procédé selon la revendication 1 ou 2, **caractérisé en ce que** les éléments de trame sont disposés suivant des lignes de trame à l'intérieur des différentes surfaces polygonales.

4. Procédé selon la revendication 3, **caractérisé en ce que** les éléments de trame des différentes lignes de trame sont associés alternativement à la première partie et à la seconde partie.

5. Procédé selon l'une des revendications précédentes, **caractérisé en ce que** l'interpolation de la valeur d'information d'image d'un élément de trame d'une ligne de trame s'effectue à partir des valeurs d'information d'image, d'au moins deux éléments de trame voisins de la même ligne de trame, calculés auparavant conformément au modèle local d'éclairement ou à une partie du modèle local d'éclairement.

6. Procédé selon l'une des revendications précédentes, **caractérisé en ce que** l'interpolation de la valeur d'information d'image d'un élément de trame s'effectue à partir des valeurs d'information d'image d'au moins deux éléments de trame voisins de la même ligne d'image, calculées auparavant conformément au modèle local d'éclairement ou à une partie du modèle local d'éclairement, et à partir des valeurs d'information d'image d'au moins deux éléments de trame voisins dans des lignes de trame voisines, calculées auparavant en fonction du modèle local d'éclairement ou d'une partie du modèle local d'éclairement.

7. Procédé selon l'une des revendications précédentes, **caractérisé en ce que** les valeurs d'information, calculées conformément au modèle local d'éclairement, des éléments de trame de plusieurs lignes de trame sont mémorisés, après le calcul, dans une mémoire intermédiaire (11, 12, 30) et sont lues ensuite pour l'interpolation des valeurs d'information d'image des autres éléments de trame à partir de la mémoire intermédiaire (11, 12, 30).

8. Procédé selon l'une des revendications précédentes, **caractérisé en ce que** le second ensemble de paramètres, qui représente la position spatiale et les caractéristiques optiques au moins de la première source de lumière, et/ou le troisième ensemble de paramètres, qui représente la position spatiale et les caractéristiques optiques au moins de la seconde source de lumière, sont déterminés individuellement pour chaque élément de trame ou pour chaque ligne de trame ou chaque surface polygonale au moyen d'un sixième module (28) de l'unité de calcul (1, 19), à partir d'un quatrième ensemble de paramètres, qui représente les positions spatiales ainsi que les caractéristiques optiques d'une multiplicité de sources de lumière, le sixième module (28) pour les différentes sources de lumière sélectionnant, pour les différentes sources de lumière, l'affaiblissement d'éloignement et/ou l'affaiblissement de spot de lumière et les sources de lumière possédant le plus faible affaiblissement au niveau de l'élément de trame ou de la ligne de trame ou de la surface polygonale.

**9.** Procédé selon la revendication 8, **caractérisé en ce que** le sixième module (28) calcule l'éloignement et/ou l'affaiblissement de spot de lumière dans chaque ligne de trame une fois pour toutes les sources de lumière, et classe les sources de lumière en des sources de lumière importantes et peu importantes en fonction de l'affaiblissement de distance d'éloignement calculé et/ou de l'affaiblissement de spot de lumière,

que le sixième module (28) dans chaque élément de trame calcule l'affaiblissement d'éloignement et/ou l'affaiblissement de spot de lumière pour toute les sources de lumière importantes et classe les sources de lumière comme peu importantes dans le cas du dépassement d'une valeur de seuil pour l'affaiblissement d'éloignement et/ou pour l'affaiblissement de spot de lumière,

le sixième module (38) dans chaque élément de trame calcule l'affaiblissement d'éloignement et/ou l'affaiblissement de spot de lumière pour l'une des sources de lumière peu importantes et classe cette source de lumière comme importante lorsque l'affaiblissement d'éloignement et/ou l'affaiblissement de spot de lumière tombent au-dessous d'une valeur prédéterminée.

**10.** Procédé selon la revendication 8 ou 9, **caractérisé en ce que** le calcul du second ensemble de paramètres, qui représente la position spatiale et les caractéristiques optiques au moins de la première source de lumière, et/ou du troisième ensemble de paramètres représentant les caractéristiques optiques au moins de la seconde source de lumière, s'effectue à partir du quatrième ensemble de paramètres, qui représente la position spatiale et les caractéristiques optiques d'une multiplicité de sources de lumière, lors d'une représentation d'un objet mobile respectivement en fonction d'un nombre prédéterminé d'alternances d'image, le premier ensemble de paramètres et/ou le second ensemble de paramètres étant conservés entre les calculs d'actualisation, dans un élément de mémoire pour l'accès réalisé par le troisième module (7, 24).

**11.** Procédé selon l'une des revendications précédentes, **caractérisé en ce que** les valeurs d'information d'image de la seconde partie des éléments de trame sont interpolées respectivement par un polynôme à partir des valeurs d'information d'image de plusieurs éléments de trame de la seconde partie.

**12.** Procédé selon l'une des revendications précédentes, **caractérisé en ce que** pour des éléments de trame voisins de la première partie des éléments de trame, la différence des valeurs d'information d'image est calculée et est comparée à une valeur limite prédéterminée,

**que** lors du dépassement de la différence calculée des valeurs d'information d'image pour au moins un élément de trame de la seconde partie de l'élément de trame la valeur d'information d'image est calculée conformément au modèle local d'éclairement.

**13.** Dispositif pour la mise en oeuvre du procédé de représentation d'images selon l'une des revendications précédentes, comportant:

une entrée pour recevoir un premier ensemble de paramètres représentant la position spatiale respectivement de l'une des surfaces polygonales, et d'un second ensemble de paramètres représentant la position spatiale et les caractéristiques optiques au moins d'une première source de lumière,

une unité de calcul (1, 19) reliée à l'entrée et comportant un premier module (3, 4, 20, 21) pour calculer une multiplicité de premiers ensembles de coordonnées représentant la position spatiale respectivement d'un élément de trame de la surface polygonale respective, à partir du premier ensemble de paramètres,

un second module (5, 6, 22, 23) pour calculer des seconds ensembles de coordonnées, représentant la position spatiale de la normale locale à la surface dans les différents éléments de trame, en fonction du premier ensemble de paramètres,

un troisième module (7, 24) pour calculer des valeurs d'information d'image, reproduisant l'impression d'image respectivement d'un élément de trame, conformément à un modèle local d'éclairement en fonction du second ensemble de paramètres, qui reproduit la position spatiale de la première source de lumière, et en fonction du second ensemble de coordonnées qui représente la position spatiale de l'élément de trame respectif, ainsi qu'à partir du second ensemble de coordonnées représentant la position spatiale de la normale locale à la surface, ainsi

qu'un quatrième module (4, 21) pour calculer un second ensemble bidimensionnel de coordonnées d'écran pour chaque élément de trame à partir du premier ensemble de coordonnées représentant la position spatiale de l'élément de trame,

**caractérisé en ce**

**que** l'unité de calcul (1, 19) comporte, pour l'interpolation de valeurs d'information d'image d'éléments de trame individuelles à partir des valeurs d'information d'image d'éléments de trame voisins, calculées auparavant conformément au modèle local d'éclairement, un cinquième module (10.1 à 13, 31), qui est relié, côté entrée, à la réception des valeurs d'information d'image calculées, au troisième module (7, 24).

14. Dispositif selon la revendication 13, **caractérisé en ce que** le troisième module (7, 24) de l'unité de calcul (1, 19) est relié côté sortie à une mémoire intermédiaire (10.1, 10.2, 30) pour la mémorisation intermédiaire des valeurs d'information d'image, calculées en fonction du modèle local d'éclairement, pour l'interpolation ultérieure.

15. Dispositif selon la revendication 14, **caractérisé en ce que** la mémoire intermédiaire est une mémoire FIFO (10.1, 10.2).

16. Dispositif selon l'une des revendications 13 à 15, **caractérisé en ce que**
que pour le calcul du second ensemble de paramètres, qui représente la position spatiale et les caractéristiques optiques au moins de la première source de lumière, et/ou du troisième ensemble de paramètres, qui représente la position spatiale et les caractéristiques optiques au moins de la seconde source de lumière, il est prévu individuellement pour chaque élément de trame ou chaque ligne de trame ou chaque surface polygonale à partir du quatrième ensemble de paramètres représentant la position spatiale ainsi que les caractéristiques optiques d'une multiplicité de sources de lumière, un sixième module (28), qui calcule l'affaiblissement d'éloignement et/ou l'affaiblissement de spot de lumière pour les sources de lumière définies par le quatrième ensemble de paramètres, et sélectionne les sources de lumière possédant l'affaiblissement le plus faible sur le site de l'élément de trame au niveau de l'emplacement de l'élément de trame ou de la ligne de trame ou de la surface polygonale.

Fig.1

EP 0 869 459 B1

Fig.2a

Fig.2b

$S_{dli}$   $P_{pli}$

$r_i$   $n$

$e$   $l_i$

$P$

Fig.3

Fig.4

EP 0 869 459 B1

Fig.5